(19)

Europäisches
Patentamt
European
Patent Office
Office européen
des brevets

(11) **EP 3 235 558 A1**

(12) **EUROPEAN PATENT APPLICATION**

(43) Date of publication:
**25.10.2017 Bulletin 2017/43**

(21) Application number: **16166434.7**

(22) Date of filing: **21.04.2016**

(51) Int Cl.:
***B01D 69/08*** (2006.01)     ***B01D 53/22*** (2006.01)
***B01D 71/26*** (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicants:
• **3M Innovative Properties Company
St. Paul, MN 55133-3427 (US)**

• **DMF Medical Incorporated
Halifax, Nova Scotia B3H 4S9 (CA)**

(72) Inventor: **The designation of the inventor has not
yet been filed**

(74) Representative: **Schröder, Richard
3M Belgium bvba/sprl
Hermeslaan 7
1831 Diegem (BE)**

(54) **HOLLOW FIBER MEMBRANE FOR USE IN AN ANESTHETIC CIRCUIT**

(57)     Hydrophobic poly(4-methyl-1-pentene) hollow fiber membrane for retention of anesthetic agents with an inner and an outer surface and between inner and outer surface an essentially isotropic support layer with a sponge-like, open-pored, microporous structure free of macrovoids and adjacent to this support layer on the outer surface a dense separation layer with a thickness between 1.0 and 3.5 $\mu$m. The membrane has a porosity in the range of greater than 35% to less than 50% by volume and a permeance for $CO_2$ of 20-60 mol/(h·m²·bar), a gas separation factor $\alpha(CO_2/N_2)$ of at least 5 and a selectivity $CO_2$ / anesthetic agents of at least 150.

The process for producing this membrane is based on a thermally induced phase separation process in which process a homogeneous solution of a poly(4-methyl-1-pentene) in a solvent system containing compounds A and B is formed, wherein compound A is a strong solvent and compound B a weak non-solvent for the polymer component. After formation of a hollow fiber the hollow fiber is cooled in a liquid cooling medium to form a hollow fiber membrane. The concentration of the polymer component in the solution may be between 42.5- and 45.8 wt.-% and the hollow fiber leaving the die runs through a gap between die and cooling medium with a gap length in the range of 5-30 mm.

**EP 3 235 558 A1**

**Description**

The invention relates to a hydrophobic integrally asymmetrical hollow fiber membrane that is suited in particular for gas exchange, is composed primarily of a poly(4-methyl-1-pentene) and has an inner surface facing towards its lumen, an outer surface facing outwards, the membrane having between inner surface and outer surface a support layer with a sponge-like, open-pored, microporous structure and adjacent to this support layer on the outer surface a separation layer with denser structure, wherein the support layer is free of macrovoids and the pores in the support layer are on average essentially isotropic.

The invention relates further to a process for manufacturing this membrane using a thermally induced phase separation process, the membrane having a sponge-like, open-pored, microporous structure.

In a multitude of applications in the fields of chemistry, biochemistry, or medicine, the problem arises of separating gaseous components from liquids or adding such components to the liquids. For such gas exchange processes, there is increasing use of membranes that serve as a separation membrane between the respective liquid, from which a gaseous component is to be separated or to which a gaseous component is to be added, and a fluid that serves to absorb or release this gaseous component. An important application of membrane-based gas exchange processes in the medical field is for oxygenators, also called artificial lungs. In these oxygenators, which are used in open-heart operations, for example, oxygenation of blood and removal of carbon dioxide from the blood take place. Generally, bundles of hollow-fiber membranes are used for such oxygenators.

In order to provide the blood with sufficient oxygen and at the same time to remove carbon dioxide from the blood to a sufficient extent, the membranes must ensure a high degree of gas transport: a sufficient amount of oxygen must be transferred from the gas side of the membrane to the blood side and, conversely, a sufficient amount of carbon dioxide from the blood side of the membrane to the gas side, i.e., the gas flow or gas transfer rates, expressed as the gas volume transported per unit of time and membrane surface area from one membrane side to the other, must be high. A decisive influence on the transfer rates is exerted by the porosity of the membrane, since only in the case of sufficiently high porosity can adequate transfer rates be attained. Membranes for oxygenation are e.g. described in EP-A 0 299 381, US-A 6 409 921 or US-A 6 497 752.

To keep the stress level low and relax the patient, the patient has to be asleep for many medical procedures. Thus, during a surgical intervention anesthetic agents, i.e. an anesthetic gas mixture is added to the breathing air in order to sedate the patient. Since these anesthetic gases are expensive, the anesthetic gas-air mixture is circulated.

Anesthetic circuit systems wherein anesthetic agent is partially re-used after being delivered to the patient are known in the art. The benefit is that less anesthetic agent is used. This is financially beneficial due to the relatively high cost of most anesthetic agents. The use of less anesthetic agents may also be good for the environment since some anesthetic agents, such as the halogenated hydrocarbon sevoflurane, for example, are greenhouse fluids.

Carbon dioxide is formed in the cell and is released though the alveoli of the lungs during expiration at a level of around 5% of the expiratory fluid mixture. The concentration at the end of expiration is called the end tidal carbon dioxide value. The inspiratory level of carbon dioxide is normally well below 0.5%. Having excessive levels of carbon dioxide in the blood of the patient will decrease the pH value of the blood (acidosis) and will, if not treated properly, affect the patient's brain activity and may eventually lead to unconsciousness and death.

When the patient inhales the anesthetic agent in a fluid mixture, the anesthetic agent passes through the alveoli of the lungs into the patient's blood. The patient exhales a fluid mixture comprising, among other components, exhaled anesthetic, exhaled oxygen $O_2$ and exhaled carbon dioxide $CO_2$. Due to the operation of the human's lungs, the carbon dioxide content of the exhaled fluid mixture is higher than that of the inhaled fluid mixture. Furthermore, the oxygen content of the exhaled fluid mixture is lower than that of the inhaled fluid mixture. To be able to re-use the fluid mixture (containing the exhaled anesthetic fluid), the carbon dioxide of the exhaled fluid mixture must be lowered to levels suitable for re-inhalation.

Anesthetic circuits aimed at decreasing the amount of carbon dioxide fluid re-inhaled by the patient are known in the art. Some in the industry have focused on decreasing the carbon dioxide content in the exhaled mixture, along with trying to preserve exhaled oxygen and exhaled molecular anesthetic agent within the anesthetic circuit for re-inhalation. Their desire to preserve exhaled oxygen fluid is premised on the notion that oxygen needs to be provided as part of the inhaled mixture in an appropriate level to keep the oxygen saturation in the patient's blood high enough to allow for proper metabolism. Many publications focus on separating or binding the $CO_2$ specifically and therefore separate it from the fluid mixture containing the anesthetic agent.

Some conventional anesthetic circuits use carbon dioxide absorbers to reduce exhaled carbon dioxide within the anesthetic circuit. In some cases, soda lime or baralyme, for example, are used. Sevoflurane and other anesthetic vapours can react with these carbon dioxide absorbers to produce harmful chemicals such as compound A. Compound A has been found to have negative effects such as nephro and cerebo toxic effects.

In order to circumvent the problems arising from usage of absorber materials for removal of exhaled $CO_2$ an anesthetic circuit for treating a patient has been proposed which comprises a polymeric hollow fiber membrane which is at least partially impervious to the exhaled molecular anesthetic agent but is pervious to oxygen and to carbon dioxide (see WO 2012/174649; WO 2014/094139).

The hollow fiber membranes used in these anesthetic circuits may be made of a polymethylpentene and have an asymmetric structure with a porous support layer and a denser outer layer. For example a hollow fiber membrane sold under the trademark OXYPLUS® (3M Corporation) has been used, which was contained in an QUADROX-D® oxygenator (Maquet Cardiopulmonary AG).

While it was found that removal of $CO_2$ and the $O_2$ balance could be effected sufficiently with these oxygenators containing OXYPLUS® membranes, still some amounts of anesthetic agents passed through the membrane. On the other hand, a similar membrane was used in examples of WO 2012/174649 sold under the tradename ULTRAPHOBIC (3M Corporation) which showed good retention of anesthetic agents but for which the transfer of $CO_2$ and $O_2$ across the membrane wall was insufficient.

It is therefore an object of the present invention to provide a membrane which has improved gas permeance characteristics and which could be used in an anesthetic circuit. It is a further object of the invention to provide a process for manufacturing such membrane.

The object is met by an integrally asymmetrical hollow fiber membrane for retention of anesthetic agents, which membrane is composed primarily of a poly(4-methyl-1-pentene) and has an inner surface facing towards its lumen, an outer surface facing outwards, a support layer with a sponge-like, open-pored, microporous structure between inner surface and outer surface and adjacent to this support layer on the outer surface a separation layer with denser structure, wherein the support layer is free of macrovoids and the pores in the support layer are on average essentially isotropic, characterized in that

- the separation layer has a thickness in the range between 1,0 and 3,5 $\mu$m and,
- that the membrane has a permeance for $CO_2$ of 20-60 mol/(h·m2·bar), a gas separation factor $\alpha(CO_2/N_2)$ of at least 5 and a selectivity $CO_2$ / molecular anesthetic agent of at least 150
- and that the membrane has a porosity in the range of greater than 35% to less than 50% by volume.

These membranes find excellent application in anesthetic circuits for treating patients, wherein the overall structure of the membrane allows for a high $CO_2$ permeance, i.e. for a good transport of carbon dioxide over the membrane wall, and thus makes possible sufficiently high removal rates for $CO_2$ from the exhaled fluid mixture in an anesthetic circuit. On the other hand, the high selectivity $CO_2$ / anesthetic agents of at least 150, which is caused by the structure of the separation layer of the membrane of the invention ensures a very high retention of anesthetic agents by the membrane, so that the anesthetic agents added into the fluid mixture inhaled by the patient nearly quantitatively remains in the anesthetic circuit. In a preferred embodiment the present membrane has a selectivity CO2 / anesthetic agent in the range of 220 to 1000. Particularly preferred is a selectivity $CO_2$ / agent in the range of 400 to 1000.

The anesthetic agent is understood to be a molecular anesthetic agent and may comprise a polyhalogenated ether. More particular, the molecular anesthetic agent may include at least one of sevoflurane, isoflurane or desflurane. The molecular anesthetic agent may preferably have a molecular weight of greater than 168 g/mol.

The present hollow fiber membrane has an asymmetric structure in that it has on one side of the membrane wall a dense separation layer covering a coarser pored support layer. Within the context of the present invention, an integrally asymmetrical membrane is understood to be one in which the separation and support layers consist of the same material and have been formed together directly during membrane production and both layers are integrally joined with each other as a result. In the transition from the separation layer to the support layer, there is merely a change with respect to the membrane structure. Contrasting with this are composite membranes, for example, which have a multilayer structure formed by applying, in a separate process step, a dense layer as a separation layer on a porous, often microporous support layer or support membrane. The result is that the materials constituting the support and separation layers also have different properties in the case of composite membranes.

Due to its structure, the present hollow fiber membrane is distinguished by high gas flow rates and high gas transfer rates or gas permeances, respectively, while maintaining high levels of safety with respect to a permeation of anesthetic agents. To achieve this, the volume porosity of the present membrane has to be adjusted in a rather narrow range between 35 and 50% by volume, whereby the volume porosity is determined substantially by the structure of the support layer. Preferably the membrane has a volume porosity in the range from 40% to 50% by volume.

On the other hand, it is necessary for the present membrane to have a defined separation layer with a dense structure which allows transport of oxygen and carbon dioxide but safely retains anesthetic gases. It has been found that in order to achieve safe retention of anesthetic agents, the separation layer needs to have a minimum thickness of 1.0 $\mu$m while for a sufficient transport of oxygen and carbon dioxide the thickness of the separation layer should not exceed 3.5 $\mu$m. Preferably, the separation layer of the present hollow fiber membrane may have a thickness between 1.0 $\mu$m and 2.0 $\mu$m and more preferably a thickness between 1.0 and 1.8 $\mu$m. In a further preferred embodiment of the present membrane, the membrane structure changes abruptly in the transition from the separation to the support layer. The thickness of the separation layer can be determined for the membranes of the invention in a simple manner by measuring the layer using fracture images generated by scanning electronic microscopy or by ultrathin-section characterizations using transmission electron microscopy.

The support layer of the membrane of the invention may have various structures. In one embodiment of the membrane of the invention, the support layer may have a sponge-like, cellular and open-pored structure, in which the pores can be described as enveloped microcells that are interconnected by channels, smaller pores, or passages. In another embodiment of the membrane of the invention, the support layer may have a non-cellular structure, in which the polymer phase and the pores form interpenetrating network structures. In any case, however, the support layer is free of macrovoids, i.e., free of such pores often referred to in the literature as finger pores or caverns.

The pores of the support layer can have any geometry and be, for example, of elongated, cylindrical, rounded shape, or also have a more or less irregular shape. In accordance with the invention, the pores in the support layer are on average substantially isotropic. This is understood to mean that, although the individual pores can also have an elongated shape, the pores on average in all spatial directions have substantially the same extension, whereby deviations of up to 20% can exist between the extensions in the individual spatial directions.

The membrane of the invention has a separation layer on its outer surface. In a preferred embodiment the membrane of the invention has on its inner surface facing the lumen an open-pored, network-like structure with approximately circular openings. Approximately circular openings are understood to be openings in which the ratio of the major axis to the minor axis does not exceed 2:1. Due to their open-pored structure, such membranes have on their one side a comparatively small resistance to gas flow, for example.

The separation layer influences the gas flow and gas transfer rates. It also influences whether and how well various gases in a gas mixture can be separated from one another, i.e., the gas separation factor $\alpha(CO_2/N_2)$, for example.

In the dense separation layer of the present membrane, the gas transfer or gas flow takes place via solution diffusion. The tightness of the separation layer and its suitability in particular for gas transfer can often not be evaluated with sufficient reliability solely on the basis of visual inspection, using a scanning electron microscope for example. In this case, not only the size of existing pores or in general structural defects such as fissures but also their number play a role. However, for membranes having a dense separation layer, the characteristics of the separation layer can only be evaluated by examining the gas permeation and gas flow through the membrane as well as the gas separation factors.

It is well known that the general principles of gas transport in polymer membranes depend on the pore size in the membrane. In membranes with a dense separation layer, the gas permeates through this membrane via solution diffusion mechanisms. The permeability coefficient $P_0$ of a gas then depends solely on the polymer material of the membrane and on the gas itself, and the gas flow $Q_0$, i.e., the permeability coefficient divided by the membrane thickness, depends, for a given gas, only on the thickness of the non-porous membrane. The gas separation factor $\alpha$, which specifies the ratio of the permeability coefficients or the gas flows Q of two gases in this membrane, therefore depends likewise solely on the polymer material and not, for example, on the thickness of the separation layer. For example, the gas separation factor for $CO_2$ and $N_2$ is then $\alpha_0(CO_2/N_2) = P_0(CO_2)/P_0(N_2)$. For polymers in general use, resulting $\alpha_0(CO_2/N_2)$ values are at least 1 and generally at least 3.

Thus, to ensure the gas flow characteristic of the present invention and to ensure a high integrity of the separation layer, the hollow fiber membrane, therefore, preferably may have a gas separation factor $\alpha(CO_2/N_2)$ of at least 8 and more preferably of at least 10.

Despite the presence of a dense separating layer the membrane of the invention exhibits a high permeance for $O_2$ and $CO_2$. In particular the permeance with respect to $CO_2$ is an important factor in anesthetic circuits in order to remove $CO_2$ from the patient's exhaled fluid mixture. The $O_2$ and $CO_2$ permeances are thus regarded as a measure for the gas transfer capacity of the membrane, in each case with respect to the permeate side being held at atmospheric pressure. The membrane may have a permeance for $CO_2$ of 20-60 mol/(h·m$^2$·bar) and preferably of 25-40 mol/(h·m$^2$·bar). In a further preferred embodiment the membrane may have a 02 permeance of at least 10 mol/(h·m$^2$·bar) and more preferably of at least 15 mol/(h·m$^2$·bar).

The hollow-fiber membrane preferably has an outside diameter between 200 and 500 $\mu$m, especially preferably between 300 and 400 $\mu$m. A wall thickness of the hollow-fiber membrane between 50 and 150 $\mu$m is advantageous, and a thickness between 50 and 100 $\mu$m is especially advantageous.

The hollow-fiber membrane according to the invention can be produced by means of a method in which the membrane formation takes place via a thermally induced phase separation process.

The object of the invention is further met by a process for producing the integrally asymmetrical hydrophobic hollow fiber membrane of the invention composed primarily of a poly(4-methyl-1-pentene) and having an inner surface facing towards its lumen, an outer surface facing outwards, the membrane having between inner surface and outer surface a support layer with a sponge-like, open-pored, microporous structure and adjacent to this support layer on the outer surface a separation layer with denser structure, wherein the support layer is free of macrovoids and the pores in the support layer are on average essentially isotropic, the process comprising at least the steps of:

a) preparing a homogeneous solution of a polymer component consisting of a poly(4-methyl-1-pentene) in a solvent system containing a compound A and a compound B that are liquid and miscible with each other at the dissolving temperature, whereby the employed mixture of the polymer component and compounds A and B has a critical demixing temperature and a solidification temperature and has a miscibility gap in the liquid state of aggregation below the critical demixing temperature, whereby a strong solvent for the polymer component is selected for compound A, for which the demixing temperature of a solution of 25% by weight of the polymer component in this solvent is at least 10% below the melting point of the pure polymer component, and compound B raises the demixing temperature of a solution consisting of the polymer component and compound A, wherein compound B is a weak non-solvent for the polymer component, which does not dissolve the polymer component to form a homogeneous solution when heated to the boiling point of compound B and for which the demixing temperature of a system consisting of 25% by weight of the polymer component, 10% by weight of the weak non-solvent, and 65% by weight of compound A, used as the solvent, is at most 10% above the demixing temperature of a system consisting of 25% by weight of the polymer component and 75% by weight of compound A,

b) rendering the solution to form a hollow fiber, with outer and inner surfaces, in a die having a temperature above the critical demixing temperature,

c) cooling of the hollow fiber using a liquid cooling medium having an entrance surface, which cooling medium does not dissolve the polymer component or react chemically with it at temperatures up to the die temperature and is tempered to a cooling temperature below the solidification temperature, wherein the cooling medium is a homogeneous, single-phase liquid at the cooling temperature and the cooling is done at such a rate that a thermodynamic non-equilibrium liquid-liquid phase separation into a high-polymer-content phase and a low-polymer content phase takes place and solidification of the high-polymer-content phase subsequently occurs when the temperature falls below the solidification temperature,

d) possibly removing compounds A and B from the hollow fiber,

characterized in that the concentration of the polymer component in the homogeneous solution is in the range between 42.5 and 45.8% by weight and the concentration of the solvent system in the range between 57.5 and 54.2% by weight and that the hollow fiber leaving the die runs through a gap between the exit surface of the die and the surface of the cooling medium before entering the cooling medium, wherein the gap has a length in the range from 5 to 30 mm.

It has been found to be essential in the process of the invention to adjust the concentration of the polymer component in the homogeneous solution in a very narrow range between 42.5 and 45.8% by weight in order to obtain a hollow fiber membrane having the required balanced properties with respect to the permeance of $O_2$ and $CO_2$ on one hand and of the anesthetic agents on the other hand. In addition, in order to obtain a separation layer having the required properties, is necessary for the hollow fiber exiting the die to travel through a gap before entering the cooling medium. In the process of the invention the gap between the die an the entrance surface of the cooling medium may have a length in the range of 5 to 30 mm. When adjusting the gap length in the required range, hollow fiber membranes with sufficiently dense separation layers are obtained while the separation layer still is sufficiently permeable for $CO_2$.

The process according to the invention is based on a thermally induced phase separation process with liquid-liquid phase separation. According to the invention, the polymer component and compounds A and B form a binary system, which in the liquid state of aggregation has a range in which the system is present as a homogeneous solution and a range in which it exhibits a miscibility gap. If such a system is cooled, from the range in which it is present as a homogenous solution, below the critical demixing or phase separation temperature, liquid-liquid demixing or phase separation into two liquid phases, namely one with a high polymer content and the other with a low polymer content, initially takes place. On further cooling, below the solidification temperature, the high-polymer-content phase solidifies to form a three-dimensional membrane structure. The cooling rate thereby has a substantial influence on the pore structure being created. If the cooling rate is high enough that the liquid-liquid phase separation cannot take place under thermodynamic equilibrium conditions but rather under thermodynamic non-equilibrium conditions and on the other hand still relatively slowly, the liquid-liquid phase separation occurs approximately concurrently with the formation of a large number of droplets of liquid that are of substantially the same size. The resulting polymer object then has a sponge-like cellular and open-pored microstructure. If the cooling rate is significantly higher, the polymer solidifies before most of the droplets of liquid can form. In this case, network-like microstructures are formed. The variety of such sponge-like microporous structures formed via processes with thermally induced liquid-liquid phase separation are described in detail in US-A 4 519 909, to the disclosure of which reference is hereby explicitly made, and depicted for example in R.E. Kesting, "Synthetic Polymeric Membranes", John Wiley & Sons, 1985, pp. 261-264.

The employed combinations of the polymer component, compound A, and compound B, whereby compounds A and B together form the solvent system, must be convertible jointly into a single homogeneous liquid phase and have a critical demixing temperature below which a phase separation into two liquid phases occurs. This is higher, however, than the demixing temperature of a solution containing equal parts of polymer but only compound A as a solvent system. In polymer/compound A systems with a miscibility gap in the liquid state of aggregation, the addition of compound B therefore raises the critical demixing temperature. Adding compound B enables selective control of pore size and pore volume in the porous structures obtained.

For compound A, compounds are to be used that are solvents for the polymer component and in which, when heated at most to the boiling point of this compound, this polymer component is dissolved completely to form a homogeneous solution. According to the invention, a solvent must be used as compound A for which the demixing temperature of a solution of 25% by weight of the polymer component in this solvent is at least 10% under the melting point of the pure component consisting of the at least one polymer. Within the scope of the present invention, such a solvent is referred to as a strong solvent.

The demixing or phase separation temperature can be determined in a simple manner by initially preparing a homogeneous solution of the polymer component in the solvent to be investigated and then heating this solution to a temperature approximately 20°C above the dissolving temperature. This solution is stirred and maintained at this temperature for about 0.5 hours, in order to achieve sufficient homogeneity. Subsequently, the solution is stirred and cooled at a rate of 1°C/min. The phase separation temperature is determined as the temperature at which clouding becomes visible. On further cooling, the phase with high polymer content solidifies at the solidification temperature.

For compound B, according to the invention a compound is selected that is a weak non-solvent for the polymer component. Non-solvent for the polymer component is understood to mean a compound that does not dissolve the polymer component, in a concentration of 1% by weight in the non-solvent, to form a homogeneous solution when heated to at most the boiling point of this non-solvent. In the scope of the present invention, the strength of the non-solvent is assessed on the basis of the difference between the demixing temperature of a system consisting of the polymer component and a strong solvent and the demixing temperature of a corresponding system containing as a solvent system the same solvent and 10% by weight of the non-solvent to be investigated. The polymer concentration in each case is 25% by weight. A weak non-solvent is then understood to be one that leads to an increase in the demixing temperature of at most 8% relative to the demixing temperature of the corresponding system consisting only of solvent and polymer. A strong non-solvent is, by definition, one that leads to an at least 10% increase in the demixing temperature.

Compound A can also be blended with one or more liquids, in particular other solvents. Compound B can also be employed as a mixture with one or more other compounds, in particular additional non-solvents. As a result, within the context of the present invention, compound A is understood as not only a single compound but also a mixture of different solvents, for example two strong solvents or a strong with a weak solvent, as long as the overall action as a strong solvent is maintained. Likewise, compound B is also understood to be a mixture of different non-solvents, for example several weak non-solvents, as long as the action as a weak non-solvent is maintained.

The fraction of polymer required for membrane production and the ratio of compound A to compound B in the solvent system can be determined by generating phase diagrams in simple experiments. Such phase diagrams can be developed using known methods, such as are described in C.A. Smolders, J.J. van Aartsen, A. Steenbergen, Kolloid-Z. und Z. Polymere, 243 (1971), pp. 14-20. As a rule, for a given solvent A, the fraction of compound B, i.e., weak non-solvent, in the mixture of the polymer component, compound A, and compound B depends on the strength of the non-solvent, i.e., compound B. Preferably, the fraction of compound B in the solvent system is 1 to 45% by weight.

In the process according to the invention, the polymer component is a poly(4-methyl-1-pentene). It has been found that poly(4-methyl-1-pentene) has high gas permeability coefficients for $O_2$ and $CO_2$ and thus high gas transfer rates or permeances can be realized when using this polymer while maintaining good mechanical properties for the membranes.

For compounds A and B, which jointly form the solvent system, compounds are to be used that fulfill the stated conditions. For the present process, compound A is preferably dioctyl adipate, isopropyl myristate, diphenyl ether, dibenzyl ether, or mixtures thereof. Glycerin triacetate, diethyl phthalate, castor oil, N,N-bis(2-hydroxyethyl)tallow amine, soybean oil, or mixtures thereof have proven advantageous as compound B. Especially good results are obtained when glycerin triacetate is used as compound B. In a particular preferred embodiment of the process the solvent system comprises a mixture of dioctyl adipate, glycerin triacetate and castor oil. Membranes produced from this solvent system on one hand show the required characteristics regarding gas transfer rates (permeance) and selectivity but also exhibit good mechanical properties.

The polymer fraction of the solution has to be set to the narrow range between 42.5 and 45.8% by weight, and the fraction of the solvent system, consisting of compounds A and B, to the range between 57.5 and 54.2% by weight. The polymer fraction is preferred to be 43-45.5% by weight and the fraction of compounds A and B 57-54.5% by weight. If necessary, additional substances such as antioxidants, nucleating agents, fillers and similar substances can be employed as additives to the polymer component, compounds A and B, or to the polymer solution.

The polymer solution formed from the polymer component and the solvent system is given shape using suitable dies to produce a hollow-fiber membrane. Conventional hollow-fiber dies can be employed.

In the present process for manufacturing the hollow-fiber membranes the polymer solution is extruded through the annular gap of the hollow-fiber die to form a hollow fiber. A fluid is metered through the central bore of the hollow-fiber die that acts as an interior filler for shaping and stabilizing the lumen of the hollow-fiber membrane. The extruded hollow fiber leaving the hollow-fiber die at the die exit surface then exhibits a surface facing the lumen, the interior surface, and a surface facing away from the lumen, the exterior surface, separated from the interior surface by the wall of the hollow fiber.

The interior filler employed can be in gaseous or liquid form. When using a liquid as the interior filler, a liquid must be selected that substantially does not dissolve the polymer component in the shaped polymer solution below the critical demixing temperature of the polymer solution. To achieve an open-pored structure on the interior surface, interior fillers are preferably used that are solvents for the at least one polymer used, whereby the previously cited condition must be observed, and/or temperatures of the interior filler are set that are in the vicinity of the polymer solution temperature. The interior filler can be miscible with the solvent system. Preferably the interior filler is gaseous; it can be air, a vaporous material, or preferably nitrogen or other inert gases.

After shaping, the hollow fiber is cooled using a liquid cooling medium, so that a thermodynamic non-equilibrium liquid-liquid phase separation occurs in the hollow fiber, i.e., in the shaped polymer solution, and the polymer structure subsequently solidifies and hardens. In this process, the liquid cooling medium has been tempered to a temperature below the solidification temperature. According to the invention, in order to produce the desired integrally asymmetrical membrane with separation layer, the cooling medium must be one that does not dissolve the polymer component and does not chemically react with it, even when the medium is heated to the die temperature. The use of such a cooling medium is decisive for the formation of a separation layer. Such a requirement placed on the cooling medium rules out, for example, the use as a cooling medium of the mixture of compounds A and B employed as the solvent system. Although such a system would not dissolve the polymer component at the cooling temperature, the polymer component forms a homogeneous solution at the die temperature, as previously noted.

In the process of the invention the exit surface of the die and the surface of the cooling medium are spatially separated by a gap, which is transited by the extruded hollow fiber prior to contact with the liquid cooling medium and which may have a length in the range from 5 to 30 mm. In a preferred embodiment of the present process the gap may have a length in the rage of 15 to 25 mm. As mentioned above, for of a separation layer having the required characteristics it is decisive for the extruded hollow fiber to run through a gap between exit surface of the hollow fiber die and the entrance surface of the liquid cooling medium. The gap preferably may be an air gap, which at least partially may be heated at the upper end by the hollow fiber forming die. It is believed that formation of a separation layer on the outside surface of the hollow fiber is already initiated in the gap between die and surface of the cooling medium. Only in case the hollow fiber travels through a gap having a length in the range from 5 to 30 mm a hollow fiber membrane is obtained after cooling having a sufficiently dense separation layer.

It is preferred for the liquid used as the cooling medium to be a non-solvent for the polymer component, i.e., it does not dissolve the polymer component to form a homogeneous solution when heated to at most the boiling point of the cooling medium. The liquid used as the cooling medium can also contain a component that is a solvent for the polymer component, or it can also be a mixture of different non-solvents, as long as it overall does not dissolve the polymer component. It is observed in this case that the degree of non-solvent character of the cooling medium influences the tightness of the separation layer being formed. In an especially preferred embodiment of the process according to the invention, therefore, a liquid is used as a cooling medium that is a strong non-solvent for the polymer component. Concerning the definitions of non-solvent and strong non-solvent, reference is made to the previous discussion in conjunction with compound B. Preferably, the cooling medium at the cooling temperature is a homogeneous, single-phase liquid. This ensures production of membranes with especially homogeneous surface structures. The liquid cooling medium can be one that is miscible with the solvent system to form a homogeneous solution or one that does not dissolve the compounds forming the solvent system.

To initiate a thermodynamic non-equilibrium liquid-liquid phase separation, the temperature of the cooling medium must be significantly below the critical demixing temperature or phase separation temperature of the polymer solution used and furthermore below the solidification temperature in order to solidify the phase with high polymer content. In this case, the formation of the separation layer is promoted when there is as great a difference as possible between the demixing temperature and the temperature of the cooling medium. The cooling medium preferably has a temperature at least 100°C below the phase separation temperature, and especially preferably a temperature that is at least 150°C below the phase separation temperature. It is particularly advantageous if the temperature of the cooling medium in this case is under 50°C. In individual cases, cooling to temperatures below ambient temperature can be required. It is also possible for cooling to take place in several steps.

The liquid cooling medium is preferably in a shaft or spinning tube which the shaped object passes through for cooling purposes. The cooling medium and shaped object are generally fed in the same direction through the shaft or spinning tube. The shaped object and cooling medium can be fed at the same or different linear speeds through the spinning tube, whereby, depending on the requirement, either the shaped object or the cooling medium can have the higher linear speed. Such process variants are described in US-A 4 564 488 or US-A 4 666 607, for example.

After cooling and hardening of the polymer structure, compounds A and B are usually removed from the membrane structure so produced. Removal can be performed, for example, by extraction. Preferably, extraction agents are used that do not dissolve the polymer or polymers but are miscible with compounds A and B. Subsequent drying at elevated temperatures can be necessary to remove the extraction agent from the membrane. Suitable extraction agents are acetone, methanol, ethanol, and preferably isopropanol.

The invention will now be described in more detail with reference to the following examples and figures:

The following method was employed to characterize the membranes obtained:

Determination of the volume porosity:

A sample of at least 0.5 g of the membrane to be examined is weighed in a dry state. The membrane sample is then placed for 24 hours into a liquid that wets the membrane but does not cause it to swell, such that the liquid penetrates into all pores. This can be detected visually in that the membrane sample is transformed from an opaque to a glassy, transparent state. The membrane sample is then removed from the liquid, liquid adhering to the sample removed by centrifugation at about 1800 g, and the mass of the thus pretreated wet, i.e., liquid-filled, membrane, determined.

The volume porosity in % is determined according to the following formula:

$$\text{Volume porosity [\%]} = 100 * \frac{(m_{wet} - m_{dry})/\rho_{liq.}}{(m_{wet} - m_{dry})/\rho_{liq.} + m_{dry}/\rho_{polymer}}$$

where

$m_{wet}$ = weight of the wet, liquid-filled membrane sample
$m_{dry}$ = weight of the dry membrane sample
$\rho_{liq.}$ = density of the liquid used
$\rho_{polymer}$ = density of the membrane polymer

**Examples and Comparative Examples:**

In the Examples and Comparative Examples (UP-1 a, UP-1 b, UP-2, UP-3, UP-4, UP-5, UP-6), the membranes were manufactured according to the following procedure:

Poly(4-methyl-1-pentene) (TPX DX845) in the required weight percentage was dissolved in a nitrogen atmosphere in a container with stirrer at a temperature of 260°C in 63.4% by weight of a solvent system consisting of 70% by weight dioctyl adipate, 20% by weight glycerin triacetate, and 10% by weight castor oil. After degassing, the clear and homogeneous solution was fed with a gear pump to a hollow-fiber die with an annular-gap outside diameter of 1.2 mm, which had been heated to 248°C, and extruded to form a hollow fiber. Nitrogen was metered into the lumen of the hollow fiber through the interior bore of the hollow-fiber die. After an air section of 24 mm, the hollow fiber passed through an approx. 1 m long spinning tube, through which glycerin triacetate, tempered to ambient temperature, flowed as a cooling medium. The hollow fiber, solidified as a result of the cooling process in the spinning tube, was drawn off from the spinning tube at a rate of 72 m/min, wound onto a spool, subsequently extracted with isopropanol, and then dried at approx. 120°C.

Hollow-fiber membranes were obtained with an inner diameter of 200 $\mu$m and a wall thickness of 90 $\mu$m, for which no pores were observable on its exterior surface in a scanning-electron-microscopic (SEM) image even at 60000x magnification whereas the interior surface facing the lumen had an open-pored, network-like structure with approximately circular openings. The sponge-like, open-pored, microporous support structure is covered by an approx. 1.5-2.0 $\mu$m thick separation layer.

The invention is further described in the following presentation titled "Characterization of dense PMP membranes for the separation of carbon dioxide from anaesthetic vapours in low pressure applications", pending submission to the Journal of Membrane Science, the disclosure thereof being fully incorporated herein:

Characterization of dense PMP membranes for the separation of carbon dioxide from anaesthetic vapours in low pressure applications *F Wilfart M Soehl, N Kilcup, I Voigt, J Haelssig* Pending submission to the Journal of Membrane Science.

Membranes have been identified as a solution for $CO_2$ removal from anesthesia circuits (Chapter I). The selectivity for $CO_2$ and anaesthetic vapours has to be balanced with the $CO_2$ removal capacity of the membrane. As the system is limited to passive transport only by the partial pressure difference of $CO_2$ across the membrane, the $CO_2$ transport can only be optimized by changing the membrane properties and the system design. A unique approach for characterization is developed and applied to guide custom modifications of the membrane properties by 3M.

## ABSTRACT

Developed countries are facing a significant rise in healthcare spending, partially driven by a fast growing and frail population segment of senior patients. This is compounded by the shrinking relative population of young people working and paying taxes to provide the funds for this increased burden on the health care system. Medical advances allow for limited mortality after operating on patients as old 100 years of age or even older. However, these interventions come with a hefty price tag: a 25-80% of patients over 65 years old who undergo survey have some level of reduced brain function post operatively. The majority of all surgeries are performed under general anaesthesia, typically using anaesthetic vapours. To allow for rebreathing of these anaesthetic vapours without accumulating $CO_2$, chemical absorbers are used. Chemical absorbers produce compounds, harmful to patients, therefore requiring dilution of the gas mixture. This causes large vapour losses to the environment. These vapours are expensive and also harmful to the environment. The use of a dense polymeric membrane to separate accumulated $CO_2$ from the anaesthesia circuit would prevent the production of the toxic by-products (i.e. increase patient safety) and retain the expensive anaesthetic vapour (i.e. minimize financial and environmental costs). A tailored characterization approach, close to the operating conditions during anaesthesia was developed, to evaluate membrane performance in order to optimize membrane properties. Specifically, the selectivity and permeance of a custom series of hollow fiber poly(methyl-pentene) (PMP) membranes with different polymer/solvent ratios was evaluated for pure gasses and gas mixtures using $O_2$, $CO_2$ and anaesthetic vapours vapour (Sevo-, Des-, Isoflurane). Generally, an increase in solvent ratio increased $CO_2$ permeance, maintained the selectivity for $O_2$, $CO_2$, and $N_2$, and for anaesthetic vapours in all but the two highest solvent ratios. $CO_2$ permeance did vary significantly for mixtures with Isoflurane in comparison to Sevo- and Desflurane. It appears that the best $CO_2$ permeance with maintained selectivity for anaesthetic vapours can be achieved by using a solvent to polymer ratio of 1.2 to 1.4 for production.

## C.I - 1 INTRODUCTION

Developed countries are facing a significant rise in healthcare spending.[1] In 2013 healthcare expenditures, reported as a percent of GDP, were 17.1% in the US, 10.9% in Canada, 10.1% in the European Union and worldwide it was 10%.[2] One of the drivers in the industrialized world is a fast growing population segment of senior patients that will require US$136,000 - US$145,000 (1998 US$) per person in their 11.6-14.3 years beyond 70 years of age.[3] This is exacerbated by the fact that the younger population segment is shrinking and will be required to support the healthcare costs of the rapidly growing frail senior population.[4] For this reason, regulatory bodies now take into consideration not only the safety and efficacy of a given therapy but also the overall cost to the healthcare system when approving a new device or treatment.[5]

The many advances in medical sciences over the last decade have made it possible to perform surgical procedures, previously deemed unsafe, on patients as old as 103 years of age with limited mortality rates.[6] However, in recent years, 25-80% of patients have been shown to have permanently reduced brain function after surgery.[3] This permanent decline in brain function is recognized under the term Post Operative Cognitive Decline (POCD). The long-term impact of POCD ranges from loss of ability to work or to live alone, which places a significant load on the social services to provide for these people.[7] Patients with brain damage persisting up to 3-months have a five times greater probability of dying in the first year after surgery.[8]

The majority of all surgeries are performed under general anaesthesia. In most cases, the anaesthetic is delivered to patients in vapour form, supplied via mechanical ventilation in a rebreathing circuit. Vapour is delivered as a component of a pre-mixed gas mixture to the lungs and the exhaled breath remains in the anaesthesia circuit. This necessitates the removal of the carbon dioxide ($CO_2$) from the gas stream. To do this, anaesthesia circuits are equipped with a granulate-based $CO_2$ absorbent that chemically binds the $CO_2$ (Fig. I-1). However, the chemical absorber also reacts with anaesthetic vapours, producing compounds that have been shown to be harmful.[9]-[16]

This causes a dilemma: $CO_2$ absorbers are employed in order to allow for efficient rebreathing of the exhaled anaesthetic vapour, but at the same time the compound production has led to a required minimum dilution rate of 1-2 Lpm (country dependent). This in turn leads to a constant loss of anaesthetic vapour in the gas mixture displaced in the rebreathing circuit. If there was no issue of vapour breakdown in the absorber, the system could be rebreathing 100% of the anaesthetic vapour after removing the $CO_2$ and replenishing the 100-250 mL of oxygen. Such an ideal closed system is referred to as metabolic anaesthesia. The cost of the wasted vapour equates to the dilution rate, the Fresh Gas Flow (FGF). There is a linear relationship between FGF and vapour wasted.[17]-[19] These vapours are not only expensive; they are also harmful to the environment. The global warming potential (GWP[1]) for these vapours ranges from 1,401-3,714 times of that of $CO_2$.[20], [21] Additionally, some even damage the ozone layer.[22]

[1] GWP is defined as the cumulative radiative forcing integrated over a period of time from the emission of gas in relation to reference gas (carbon dioxide $CO_2$)[21]

**Hypothesis:** A membrane, selective for $CO_2$ over anaesthetic vapours, would be able to keep the desired anaesthetic vapour in the circuit while removing the $CO_2$, without creating any harmful substances. This would allow for safe, metabolic anaesthesia and the associated direct cost savings; both environmental and financial.[23], [24]

The breathing gas mixture is very high in water vapour. This, and that anaesthetic vapours are hydrocarbons, suggests dense hydrophobic PMP membranes. Prasser *et al.* (2008), Wiesenack *et al.* (2002) as well myself have previously discussed that PMP membranes are already approved and used in order to remove $CO_2$ from the patient's blood in cardiac surgery.[25]-[27]

It is important to maximize the $CO_2$ transport and minimize the loss of anaesthetic vapours. Typically, membrane transport is optimized by fitting the system with compressors and/or vacuum systems. As this system is limited to the pressure existing in the anaesthetic circuit, the $CO_2$ transport can only be optimized by changing the membrane properties and the system design. This study will develop a tailored characterization approach, close to operating conditions, and explore the optimization of the membrane properties in order to increase $CO_2$ permeance while limiting the loss of anaesthetic vapour.

This study seeks to characterize and optimize a membrane, developing and using an appropriate method, that is able to retain the halogenated and fluorinated hydrocarbons in the anaesthetic circuit while removing the $CO_2$. The membrane has to withstand the high humidity conditions and operate in a passive, low pressure environment in an anaesthetic ventilation circuit.

The characterization of volatile hydrocarbons introduces limitations to the applicability of classic characterization techniques, as the vapour state is sensitive to the temperature and pressure conditions during the characterization. Since membrane performance is dependent on operating conditions, the experiments have to be performed as close to the proposed operating conditions as possible[28]'[29] limiting the selection of characterization techniques. [28], [30]-[33] In this case, the operating conditions in an anaesthetic circuit are close to atmospheric pressure.

## C.I - 2 TAILORED MEMBRANE CHARACTERIZATION APPROACH FOR LOW PRESSURE $CO_2$ / HYDROCARBON SEPARATION

Since A. Fick and T. Graham's work in the 19th century, it is known that gas permeation through nonporous membranes has two components: solution and diffusion.[34]-[37] Components in the feed gas dissolve in the polymeric membrane material at a high pressure and then diffuse down their concentration gradient through the membrane to the permeate side of the membrane. Membrane selectivity is determined by combining the differences in component solubility and diffusivity.

The solution-diffusion model assumes that the pressure across the membrane is constant at the feed pressure ($p_0$), so diffusion is driven by concentration differences.[37] The model is able to describe permeability as a function of solubility and diffusivity. Henry's Law relates the concentration of a solute in the membrane to the bulk partial pressure applied to the membrane and accounts for the discontinuity between the bulk and membrane concentration. It is therefore possible to express the flux, $J_i$, in terms of partial pressures incorporating the solubility coefficient per Equation 3:

$$J_i = \frac{D_i S_i}{l}\left(p_{i0} - p_{il}\right)$$

$$(3)$$

Where $S_i$ is the solubility coefficient of component i (mol m$^{-2}$ bar$^{-2}$), relating the partial pressure of the component to the concentration in the membrane phase, and $p_{io}$ and $p_{il}$ are the partial pressures (bar) of component i at the feed and permeate membrane interfaces, respectively. A schematic representation of the typical bulk pressure, partial pressure and concentration profiles across a symmetric dense membrane is displayed in Fig. I-2.

The permeability, $P_i$, describes the flux, $J_i$, normalized to time, area, and driving force. $P_i$ is the product of the solubility coefficient, $S_i$, and diffusion coefficient, $D_i$, in the membrane. Since it is often difficult to define the membrane thickness in a consistent manner, especially for asymmetric membranes, where the proportional thickness of the support layer and the dense skin can vary, the permeability and membrane thickness are often lumped together into a single parameter referred to as the permeance $K_i$. The permeance can be directly calculated by normalizing the flux for the driving force, using Equation 4:

$$K_i = \frac{P_i}{l} = \frac{D_i S_i}{l} = \frac{J_i}{p_{i0} - p_{il}} \tag{4}$$

It is usually possible to assume that the component partial pressures at each membrane interface (0 and /) are equal to the average partial pressure of the feed and permeate, respectively. The membranes selected for this application are hollow fiber membranes with the dense layer in the outside (Fig. I-3).

During characterization, the feed is going to be on the lumen side and the permeate will be on the shell side of the module containing these fibers. In this case, the permeance can be calculated by dividing the flux $J_i$ of component i across the membrane by the average partial pressure difference of that component between the feed and the permeate side. On the shell-side, the permeate is assumed to be perfectly mixed, so its partial pressures are assumed to be equal to the measured outlet partial pressure.

In this case, the permeance can be calculated using Equation 5, where the partial pressure driving force is estimated using Equation 6:

$$K_i = \frac{J_i}{\Delta p_{i,LM}} \tag{5}$$

$$\Delta p_{i,LM} = \frac{\left(y_{if,in}P_f - y_{iP}P_P\right) - \left(y_{if,out}P_f - y_{iP}P_P\right)}{\ln\left(y_{if,in}P_f - y_{iP}P_P / y_{if,out}P_f - y_{iP}P_P\right)} = \frac{P_f\left(y_{if,in} - y_{if,out}\right)}{\ln\left(y_{if,in}P_f - y_{iP}P_P / y_{if,out}P_f - y_{iP}P_P\right)} \tag{6}$$

In addition to permeability and permeance, membrane selectivity is an additional intrinsic membrane property used for characterization. Membrane selectivity ($\alpha_{ij}$) is defined as the ratio of the permeability or permeance of two components (i and j) through a membrane, per Equation 7:

$$\alpha_{ij} = \frac{K_i}{K_j} = \frac{P_i}{P_j} \tag{7}$$

Selectivity can be reported as a ratio of pure gas permeance, or when measured in a mixture of the several components, as the ratio of permeance of the gas components in the mixture.

## C.I - 3 MATERIALS AND METHODS

C.I - 3.1 Membrane Test Modules

Membrane modules were supplied by 3M equipped with Luer Lock™ connectors (see **Fehler! Verweisquelle konnte nicht gefunden werden.**). The fibers were potted in the modules using polyurethane. The UltraPhobic™ membranes were manufactured with varying solvent to polymer ratios to enable the identification of the optimal membrane for the application of anaesthetic vapour separation. A minimum of three modules of each membrane type were supplied to allow the examination of variability between modules.

Table 1 summarizes some of the characteristics of the membrane modules.

*Table 1.    Summary of some characteristics of the membrane modules*

| Membrane | UP – 1a | UP – 1b | UP – 2 | UP – 3 | UP – 4 | UP – 5 | UP – 6 |
|---|---|---|---|---|---|---|---|
| Polymer concentration (wt.-%) | 46.0 | 46.0 | 45.9 | 45.5 | 45.0 | 42.5 | 41.0 |
| Fiber wall thickness (μm) | 90 | 90 | 90 | 90 | 90 | 90 | 90 |
| Fiber internal diameter (μm) | 200 | 200 | 200 | 200 | 200 | 200 | 200 |
| Active inside area (cm$^2$) | 24 | 26 | 26 | 26 | 26 | 26 | 26 |
| Active outside area (cm$^2$) | 45 | 49 | 49 | 49 | 49 | 49 | 49 |
| Module filling degree | 20.00% | 20.06% | 20.06% | 20.06% | 20.06% | 20.06% | 20.06% |

The solvent to polymer ratio increases from 1.17 to 1.86 for membranes UP-1 to UP-6. UP-1a and UP-1b are the same membrane type but were supplied from different manufacturing runs. The solvent ratio was increased in comparison to UP-1 up to UP-6, with a predicted increase of $CO_2$ permeance. The selectivity was expected to be maintained until the dense skin becomes very thin, increasing the likelihood of inconsistencies at higher solvent ratios, decreasing the selectivity for hydrocarbons.

C.I - 3.2 Gases and Vapours

A certified mixture of 5% $CO_2$ balanced in $O_2$ was used as a carrier gas in the ternary gas mixture experiments and for calibrating the mass spectrometer. A certified calibration gas mixture of He, $O_2$ and $N_2$ was also used to calibrate the mass spectrometer. The gases and gas mixtures used are listed in Table 2:

*Table 2.    List of the gases used*

| Gas | Specification | Supplier |
|---|---|---|
| $CO_2$ | USP grade, 99.5% pure, DIN: 02014459 | Praxair, Mississauga, ON, CAN |
| $O_2$ | USP grade, 99.99% pure, DIN: 02014408 | Praxair, Mississauga, ON, CAN |
| $N_2$ | | Air Liquide, Dartmouth, NS, CAN |
| 5% $CO_2$ balanced in $O_2$ | USP grade, 99.5% pure, DIN: 02014432 | Praxair, Mississauga, ON, CAN |
| He, $O_2$ and N2 | SPG-3MX0021714 | Air Liquide, Dartmouth, NS, CAN |

Sevoflurane (Abbvie, North Chicago, Illinois, United States), Desflurane and Isoflurane (both from Baxter Corporation, Deerfield, Illinois, United States) were administered with anaesthesia vapourizers (Draeger, Lübeck, Germany). The permeation apparatus was assembled with plastic Legris 1/4-inch vacuum rated PTFE fittings and 1/4-inch polyethylene tubing, as well as TruWave 1/8-inch tubing and fittings for the permeate line and mass spectrometer sampling point.

C.I - 3.3 Mass Spectrometer

A quadrupole mass spectrometer (Omnistar Model PTM81217131, Pfeiffer Vacuum, Aßlar, Germany) was used to measure the gas composition of the feed, retentate streams as well as the permeate streams for the mixed-gas tests. The mass spectrometer was controlled through Pfeiffer Vacuum's Quadera software (v4.50.004). Mass spectrometer operation, data analysis, display and storage were all controlled via Quadera. It was operated using Secondary Electron Multiplier (SEM) ion detection to achieve a higher resolution and to enable accurate detection at low concentrations. The same operating conditions were used for all of these experiments (SEM voltage of 910 V, Ion Current of 5.1[-09] A, Spectral Resolution of 50 and a dwell of one second).

The mass spectrometer was calibrated for mass specific concentration determination per Pfeiffer Vacuum's recommended calibration procedure.[38], [39] An offset calibration was performed to eliminate any inherent offset of the measured SEM signal. A mass scale adjust calibration was then conducted to tune the mass scale to adjust the measured value of each mass of interest to an integer value. A background determination calibration was then performed to identify any mass peaks from residual gases that were not associated with the gases being measured. Background spectra from this calibration were subtracted from subsequent measurements. The final calibration was the gas specific calibration, where ion peaks are translated to concentration by the gas specific calibration, which entails the assignment of compounds to mass peaks. A calibration factor library was then constructed using certified calibration gas mixtures. The mass spectrometer calibration was maintained throughout the course of the experiment testing.

Anaesthesia calibration mixtures were mixed by manually injecting a defined amount of liquid Sevoflurane, Desflurane, or Isoflurane into a syringe filled with oxygen and agitating it to vapourise the liquid. The composition was calculated using the compound properties and the ideal gas law (see Appendix A). The mixture was then used to calibrate the mass spectrometer. The concentrations supplied by the vapourizers were then verified with the calibrated device.

## C.I - 4 MEMBRANE CHARACTERIZATION

Permeation characteristics of the membrane modules were measured using a variation of the constant-pressure variable-volume method.[40] Fig. I-5 shows a schematic of the experimental system.

The feed gas flow rate was controlled using a needle valve and flow was measured using a glass tube flow meter (Scott Specialty Gases, Plumsteadville, PA, USA) and the feed pressure using an analogue pressure gauge (Speidel Keller, Jungingen, Germany, accuracy: $\pm$ 5 mmHg or ~6.67 mbar) connected to the lumen outlet stream. The feed pressure on the lumen side was held constant at 1.2 bar for each experiment. The permeate pressure on the shell side was atmospheric. One port of the shell side of the module was plugged and the other port was fed through a 3-way valve either to a modified, horizontally placed glass pipette (Fischer Scientific, 5 mL total volume) for flow measurements or to the mass spectrometer for concentration determination.

To calculate the mean flow rate, the pipette was filled with water prior to each trial and time measurements were taken at 0.5 mL intervals as the permeated gas displaced the water. Immediately following the volumetric flow rate measurement, the permeate was then fed to the mass spectrometer sampling port and the gas composition only for the mixed gas experiments. Feed gas concentrations were measured when both shell-side ports on the module were plugged. The gas composition was measured from the retentate port of the module. The system was purged with oxygen between each trial.

C.I - 4.1 Pure Gas Permeation Measurements

The pure gas permeance of the membranes was determined for pure carbon dioxide ($CO_2$), oxygen ($O_2$), and nitrogen ($N_2$) supplied at 1.2 bar. Once the concentration of the gases stabilized, the permeate line was connected to the pipette setup. Four time readings were then measured every 0.5 mL as the permeate displaced the water. These readings were averaged and counted for one trial. A minimum of three trials were performed for each module at each set of operating conditions. A minimum of three trials were performed for each module at each set of operating conditions. The pure gas permeance was calculated according to Equation 8:

$$K_i^P = \frac{Q}{A\left(p_f - p_p\right)}$$

$$(8)$$

Where Q is the permeate molar flow rate (mol/h), $p_f$ is the absolute pressure of the feed (bar), $p_p$ is the absolute pressure of the permeate (bar), and $A$ is the inside active membrane area ($m^2$). Permeance is reported in units of mol/h/m$^2$/bar. The pure gas selectivity $\left(\alpha_{ij}^P\right)$ was calculated based on the ratio of the mean permeance of two pure gases i and j per Equation 9:

$$\alpha_{ij}^P = \frac{K_i^P}{K_j^P}$$

$$(9)$$

Where $K_i^P$ and $K_j^P$ are the pure gas permeances for components *i* and *j*, respectively.

C.I - 4.2 Mixed Gas Permeation Measurements

The mixed gas permeation procedure was similar to that of the pure gas system but also required concentration measurements of the permeate. The feed and retentate compositions were determined as described above. In addition, following the flow measurements, the permeate was directed to the mass spectrometer for determination of the permeate composition.

Anaesthetic vapour concentrations for the experiments were chosen around their Minimum Alveolar Concentration (MAC). The MAC is a measure of potency of the anaesthesia gas and is defined as the minimum concentration of vapour required to immobilize 50% of patients. The MAC for Sevoflurane, Desflurane and Isoflurane is defined as 2.13%, 6.0% and 1.13% respectively.[41]-[43] The vapour experiments were conducted with vapour concentrations at the MAC for each vapour. This set of experiments was performed near clinically relevant operating conditions, at room temperature and low feed pressure (1.2 bar) with either Sevoflurane, Isoflurane or Desflurane at their MAC mixed into a 5% carbon dioxide/oxygen gas mixture to mimic exhalation during anaesthesia administration. Three modules of each membrane type were used and three runs of each module were performed for a total of *n* = 9 trials for Sevoflurane, Isoflurane and Desflurane.[2]

The mixed gas tests entailed monitoring the feed, retentate and permeate gas composition with the mass spectrometer, in addition to the flow rate. The permeances of the mixed gas components were calculated using Equation 10:

$$K_i^M = \frac{y_p Q}{A \Delta p_{i,ave}}$$

$$(10)$$

The log-mean driving force (Equation 6) was used to compute $\Delta P_{i,ave}$. The mixed gas selectivity, alpha$^M$, was calculated using the permeance of two components *i* and *j* in a gas mixture per Equation 11:

$$\alpha_{ij}^M = \frac{K_i^M}{K_j^M}$$

$$(11)$$

**C.I - 5 RESULTS AND DISCUSSION**

C.I - 5.1 Pure Gas Experiments

The pure gas permeances for carbon dioxide ($CO_2$), oxygen ($O_2$) and nitrogen ($N_2$) are shown in Fig. I-6. The property of most interest for this application is the carbon dioxide permeance. However, the permeance of nitrogen and oxygen has been determined in order to facilitate comparison with literature and manufacturer permeance results. The mean permeance differs significantly for the membrane type in each of the gas groups with P=0.0002 determined with a Kruskal-Wallis test (Gaussian approximation).

The column statistics were determined by a Dunn's Multiple Comparison Test and results are considered when P≤0.05 * and P≤0.002 **. An increase in mean $CO_2$ permeance can be observed from UP-1 to UP-6, while the mean permeances for $O_2$ and $N_2$ are nearly constant for UP-1 to UP-6 and only differ for Up-5 and Up-6.

The pure gas selectivities for each membrane variation for $CO_2/O_2$, $O_2/N_2$ and $CO_2/N_2$ are reported as the mean ± SD of pure gas permeance ratios of each component (Fig. I-7). The means are significantly different with P=0.0255 for $CO_2/O_2$, P=0.0014 for $O_2/N_2$ and P=0.008 for $CO_2/N_2$, as determined with a Kruskal-Wallis test (Gaussian approximation). The column statistics were determined by a Dunn's Multiple Comparison Test and the results are considered significant with P≤0.05 * and P≤0.002 **. It would be desirable to optimize the selectivity of the membrane for carbon dioxide over oxygen, but in rubbery polymers, high gas permeabilities are typically coupled with low selectivities for gases.

This is because selectivity is dominated by high solubility selectivity and low diffusivity selectivity. [44]

The vapour permeation experiments, discussed below, explore the trade-off between carbon dioxide permeance and selectivity, and discuss the implications of the vapour loss.

C.I - 5.2 Comparison of Pure Gas Data to other Polymers

Polymeric materials are generally defined as being either rubbery or glassy, based on the glass transition temperature. Glassy high free volume membranes typically present a high permeance for $CO_2$. However, the high free volume is associated with low material stability. Poly[4-methyl-1-pentene] (PMP) membranes provide a convenient combination of stability and permeance for $CO_2$ as the glass transition temperature of 29°C is close to room temperature. Other materials commonly used for $CO_2$ permeation are poly[1-phenyl-1-propyne] (PPP), poly[1-trimethylsilyl-1-propyne] (PTMSP), poly[1-phenyl-2-[p-[trimethylsilyl]phenyl]-acetylene] (PTMSDPA). An overview of the permeances and selectivities for these materials is provided in Table 4.

Table 3.    *Experimental and literature permeability and selectivity of various glassy polymers*

| Polymer | $P_{ip}$ ($10^3$ mol cm/m²/bar/h) [a] | | | Selectivity $\alpha$ | | |
|---|---|---|---|---|---|---|
| | **$CO_2$** | **$N_2$** | **$O_2$** | **$CO_2/O_2$** | **$O_2/N_2$** | **$CO_2/N_2$** |
| **Literature:** | | | | | | |
| PTMSP [b],[45] | 387 | 71.7 | 110 | 3.5 | 1.5 | 5.4 |
| PMP [b],[46] | 125 | 14.8 | 30.7 | 4.1 | 2.1 | 8.5 |
| PTMSDPA [b],[47] | 55.7 | 6.37 | 13.6 | 4.1 | 2.1 | 8.8 |
| PPP [b],[48] | 2.96 | 0.24 | 0.65 | 4.6 | 2.7 | 12.4 |
| **This study:** | | | | | | |
| UP – 1a | 150 | 21 | 64 | 2.3 | 3.1 | 7.2 |
| UP – 1b | 178 | 15 | 71 | 2.5 | 4.6 | 11.5 |
| UP - 2 | 208 | 14 | 96 | 2.2 | 6.9 | 15.0 |
| UP - 3 | 291 | 27 | 111 | 2.6 | 4.2 | 10.9 |
| UP - 4 | 286 | 24 | 134 | 2.1 | 5.7 | 12.1 |
| UP - 5 | 797 | 91 | 328 | 2.4 | 3.6 | 8.8 |
| UP - 6 | 998 | 95 | 380 | 2.6 | 4.0 | 10.5 |

[a] The permeabilities for the measurements in this study were found by multiplying the calculated permeance by the membrane thickness;
[b] The literature permeabilities were determined at 25°C and a feed pressure of 50 psig;

The trade-off between permeability and selectivity in glassy and rubbery polymers has been investigated in detail by Robeson *et al.* (2000) with recent updates in 2008 and 2010.[49]-[52]'[50] The efficiency of $CO_2$ removal in anaesthetic circuits will be optimized by selecting a membrane that performs near the Upper Bound. In this case the selectivity between $CO_2$ and anaesthetic vapour will limit the choice of membrane.

C.I - 5.3 Comparison to Pure Gas Data of 3M™

The membrane manufacturer, 3M, provided data on the membranes collected from their own experimental testing. The data provided by 3M is measured as one time measurements and is in good agreement with means and standard deviations of our own measurements.

C.I - 5.4 Mixed-Gas Experiments

*C.I - 5.4.1 Influence of anaesthetic vapour presence on permeance*

In order to characterize the membranes with volatile hydrocarbons, a carrier gas was necessary. The carrier was chosen as 5% $CO_2$ balanced in $O_2$ as this mixture is close to the final operating conditions. The effect of the presence of these hydrocarbons on $CO_2$ permeance was examined by comparing the pure $CO_2$ permeance results from the earlier experiments to the mixed-gas $CO_2$ permeance in gas mixtures containing either Sevoflurane, Isoflurane, or Desflurane (Fig. I-8). The $CO_2$ permeance in a mixture of 2.0/6.13/1.13% Sevoflurane/ Desflurane/ Isoflurane with a balance of 5% $CO_2$ in $O_2$ is compared to the permeance of pure $CO_2$. Permeances are shown as Mean $\pm$ SD.

The $CO_2$ permeance was significantly lower for the Isoflurane mixture from the Sevoflurane and Desflurane mixture in all membrane versions, where there was no difference between the Sevoflurane and Desflurane mixtures. Generally, the permeance in the mixtures was lower than the pure gas permeance of $CO_2$. The measurements for UP-2 could not be completed as the mass spectrometer had to be sent out for service but will be completed upon return from service and will be added after the paper comes back from review, before it gets published. The measurements for UP-5 and UP-6 were not continued due to the insufficient selectivity for hydrocarbons (see Fig. I-9). The permeance

of $CO_2$ was significantly reduced in some instances, especially with the high permeance membranes UP-5 and UP-6.

*C.I - 5.4.2 Influence of Anaesthetic Vapour Presence on Selectivity*

The membrane performance objective is to maximize $CO_2$ transport while retaining the hydrocarbons. The trade-off between $CO_2$ permeability and selectivity over hydrocarbons should be carefully balanced. This relationship will be explored in detail to maximize the removal of $CO_2$ while retaining anaesthetic vapours. Fig. I-9 shows the selectivity of $CO_2$ over Sevoflurane, Desflurane, and Isoflurane as a function of $CO_2$ permeance.

The trade-off between permeability and selectivity is evident for all three vapours, where UP-5 and UP-6 show an obvious loss of selectivity in comparison to the permeance for $CO_2$ gained. The selectivity for all three hydrocarbons is in agreement.

*C.I - 5.4.3 Influence of Membrane Polymer Concentration*

In Fig. I-9 it could be observed, that increased $CO_2$ permeance comes with a trade-off of selectivity. Fig. I-10 shows the $CO_2$ / Sevoflurane selectivity as a function of polymer concentration. Selectivity decreases with the concentration changing from 0.72 to 0.9.

*C.I - 5.4.4 Error Handling*

The aim of this study was to compare the permeance and selectivity of different PMP membrane versions. Since a II measurements were conducted under the same controlled and repeatable conditions, systematic errors in the collection of the data have not been considered in the standard deviations of the results. The magnitude of random errors has been estimated to be smaller than the error in the repeated measurements, and the standard deviation has therefore been reported. The variance differed between the experimental datasets, and they were not normally distributed. Therefore, a Kruskal-Wallis test was employed for group analysis and a Dunn's Comparison Test for the comparison of each dataset. Since these tests are normally considered conservative, the statistical statements should still be valid. Therefore, the comparison with literature and manufacturer data was only done qualitatively, not statistically.

## C.I - 6 CONCLUSION

This study employed a low-pressure characterization technique to investigate and optimize the performance of PMP membranes for the removal of $CO_2$ from anaesthesia circuits. In these systems, it is critical to achieve high $CO_2$ permeation rates while minimizing the losses of anaesthetic vapours, which are expensive and can cause damage to the environment.

The hollow fiber membranes used in this study were supplied by 3M, with the main difference being the polymer concentration used in the spinning process. The membranes were characterized as close as possible to the conditions that would actually be used in an anaesthesia application. The results indicate that the membrane performance could be tailored to achieve a good separation between $CO_2$ and the anaesthetic vapours. The simple method that was used to perform the characterization was also shown to perform well under the conditions investigated, giving comparable results to data provided by 3M. Such a method would therefore also be suitable for other low-pressure characterization experiments.

[1] S. National Center for Health, 'Health, United States', Heal. United States, 2014 With Spec. Featur. Adults Aged 55-64, 2015.

[2] 'Health expenditure, total (% of GDP)'. [Online]. Available: http://data.worldbank.org/indicator/SH.XPD.TOTL.ZS/countries/1W-US-CA-EU?order=wbapi_data_value_2013 wbapi_data_value wbapi_data_value-last&sort=asc&display=graph. [Accessed: 28-Feb-2016].

[3] J. Lubitz, L. Cai, E. Kramarow, and H. Lentzner, 'Health, life expectancy, and health care spending among the elderly', N Engl J Med, vol. 349, no. 11, pp. 1048-1055, 2003.

[4] T. A. Comans, N. M. Peel, R. E. Hubbard, A. D. Mulligan, L. C. Gray, and P. A. Scuffham, 'The increase in healthcare costs associated with frailty in older people discharged to a post-acute transition care program', Age Ageing, p. afv196, 2016.

[5] 'Promoting Safe and Effective Drugs for 100 Years'..

[6] F. E. Turrentine, H. Wang, V. B. Simpson, and R. S. Jones, 'Surgical Risk Factors, Morbidity, and Mortality in Elderly Patients', J. Am. Coll. Surg., vol. 203, no. 6, pp. 865-877, 2006.

[7] A. J. Turner, S. Nikolova, and M. Sutton, 'The effect of living alone on the costs and benefits of surgery amongst older people', Soc. Sci. Med., vol. 150, pp. 95-103, 2016.

[8] J. M. Leung, T. L. Tsai, and L. P. Sands, 'Preoperative Frailty in Older Surgical Patients Is Associated with Early Postoperative Delirium', Anesth. Analg., vol. 112, no. 5, pp. 1199-1201, May 2011.

[9] C. R. Stabernack, E. I. Eger, U. H. Warnken, H. Fürster, D. K. Hanks, L. D. Ferrell, and H. Förster, 'Sevoflurane degradation by carbon dioxide absorbents may produce more than one nephrotoxic compound in rats', Can. J. Anesth., vol. 50, no. 3, pp. 249-252, Jan. 2003.

[10] Y. C. Li, Y. N. Zhang, S. J. LIU, Y. M. ZHOU, C. S. Wang, Y. L. Gong, and E. Y. LI,'Degradation products of different water content sevoflurane in carbon dioxide absorbents by gas chromatography-mass spectrometry analysis', Chin. Med. J. (Engl)., vol. 124, no. 7, pp. 1050-1054, Apr. 2011.

[11] H. Bito and K. IKEDA, 'Degradation products of sevoflurane during low-flow anaesthesia', Br. J. Anaesth., vol. 74, no. 1, pp. 56-59, Jan. 1995.

[12] D. D. Cunningham, S. Huang, J. Webster, J. Mayoral, and R. W. Grabenkort, 'Sevoflurane degradation to compound A in anaesthesia breathing systems.', Br. J. Anaesth., vol. 77, no. 4, pp. 537-543, Oct. 1996.

[13] E. D. Kharasch, J. L. Schroeder, P. Sheffels, and H. D. Liggitt, 'Influence of sevoflurane on the metabolism and renal effects of compound A in rats.', Anesthesiology, vol. 103, no. 6, pp. 1183-8, Dec. 2005.

[14] F. Marini, I. Bellugi, D. Gambi, M. Pacenti, S. Dugheri, L. Focardi, and G. Tulli, 'Compound A, formaldehyde and methanol concentrations during low-flow sevoflurane anaesthesia: comparison of three carbon dioxide absorbers.', Acta Anaesthesiol. Scand., vol. 51, no. 5, pp. 625-32, May 2007.

[15] M. P. Bouche, J. F. Van Bocxlaer, G. Rolly, L. F. Versichelen, M. M. Struys, E. Mortier, and a P. De Leenheer, 'Quantitative determination of vapor-phase compound A in sevoflurane anesthesia using gas chromatography-mass spectrometry.', Clin. Chem., vol. 47, no. 2, pp. 281-91, Feb. 2001.

[16] C. Keijzer, R. S. G. M. Perez, and J. J. De Lange, 'Compound A and carbon monoxide production from sevoflurane and seven different types of carbon dioxide absorbent in a patient model', Acta Anaesthesiol. Scand., vol. 51, no. 12, pp. 31-37, 2007.

[17] P. Feiss, M. H. Demontoux, and D. Colin, 'Anesthetic gas and vapor saving with minimal flow anesthesia.', Acta Anaesthesiol. Belg., vol. 41, no. 3, pp. 249-51, Jan. 1990.

[18] S. M. Cotter, A. J. Petros, C. J. Dore, N. D. Barber, and D. C. White, 'Low-flow anaesthesia. Practice, cost implications and acceptability.', Anaesthesia, vol. 46, no. 12, pp. 1009-1012, 1991.

[19] J. P. Bengtson, H. Sonander, and O. Stenqvist, 'Comparison of costs of different anaesthetic techniques.', Acta Anaesthesiol. Scand., vol. 32, no. 1, pp. 33-35, 1988.

[20] S. M. Ryan and C. J. Nielsen, 'Global warming potential of inhaled anesthetics: application to clinical use.', Anesth. Analg., vol. 111, no. 1, pp. 92-8, Jul. 2010.

[21] Y. Ishizawa, 'General anesthetic gases and the global environment', Anesth. Analg., vol. 112, no. 1, pp. 213-217, 2011.

[22] P. Forster, V. Ramaswamy, P. Artaxo, T. Berntsen, R. Betts, D. W. Fahey, J. Haywood, J. Lean, D. C. Lowe, G. Myhre, J. Nganga, R. Prinn, G. Raga, M. Schulz, and R. Van Dorland, 'Changes in Atmospheric Constituents and in Radiative Forcing. Chapter 2', 2007.

[23] E. M. Sakai, L. A. Connolly, and J. A. Klauck, 'Inhalation Anesthesiology and Volatile Liquid Anesthetics: Focus on Isoflurane, Desflurane, and Sevoflurane', Pharmacotherapy, vol. 25, no. 12, 2005.

[24] J. M. Feldman, 'Managing fresh gas flow to reduce environmental contamination.', Anesth. Analg., vol. 114, no. 5, pp. 1093-101, May 2012.

[25] F. M. Wilfart, A. McFadgen, B. Kent, K. Gardiner, and M. K. Schmidt, 'Delivery of Vapors on Cardiopulmonary Bypass using Different Oxygenator Membranes', Biomed. Eng. (NY)., no. Biomed, pp. 265-270, 2011.

[26] C. Prasser, M. Zelenka, M. Gruber, a Philipp, a Keyser, and C. Wiesenack, 'Elimination of sevoflurane is reduced in plasma-tight compared to conventional membrane oxygenators.', Eur. J. Anaesthesiol., vol. 25, no. 2, pp. 152-7, Feb. 2008.

[27] C. Wiesenack, G. Wiesner, C. Keyl, M. Gruber, A. Philipp, M. Ritzka, C. Prasser, and K. Taeger, 'In vivo uptake and elimination of isoflurane by different membrane oxygenators during cardiopulmonary bypass', Anesthesiology, vol. 97, no. 1, pp. 133-138, Jul. 2002.

[28] G. Mauviel, J. Berthiaud, C. Vallieres, D. Roizard, and E. Favre, 'Dense membrane permeation: From the limitations of the permeability concept back to the solution-diffusion model', J. Memb. Sci., vol. 266, pp. 62-67, 2005.

[29] J.-L. Li and B.-H. Chen, 'Review of CO2 absorption using chemical solvents in hollow fiber membrane contactors', Sep. Purif. Technol., vol. 41, no. 2, pp. 109-122, Feb. 2005.

[30] B. Kruczek, H. Frisch, and R. Chapanian, 'Analytical solution for the effective time lag of a membrane in a permeate tube collector in which Knudsen flow regime exists', J. Memb. Sci., vol. 256, no. 1, pp. 57-63, Apr. 2005.

[31] B. Kruczek, F. Shemshaki, S. Lashkari, R. Chapanian, and H. L. Frisch, 'Effect of a resistance-free tank on the resistance to gas transport in high vacuum tube', J. Memb. Sci., vol. 280, no. 1-2, pp. 29-36, Sep. 2006.

[32] R. Chapanian, F. Shemshaki, and B. Kruczek, 'Flow rate measurement errors in vacuum tubes: Effect of gas resistance to accumulation', Can. J. Chem. Eng., vol. 86, no. 4, pp. 711-718, Aug. 2008.

[33] S. Lashkari, 'Fundamental Aspects of Membrane Characterization by Constant Volume and Constant Pressure Techniques', 2008.

[34] T. Graham, 'LV . On the absorption and dialytic separation of gases by colloid septa', vol. 32, no. december, pp. 401-420, 1866.

[35] B. Kruczek and S. Lashkari, 'Challenges in Microflow Measurements', in Flow Measurement, D. G. Urquiza, Ed. InTech, 2012.

[36] Y. Yampolskii, 'Polymeric Gas Separation Membranes', Chem. Eng. Sci., vol. 45, pp. 3298-311, 2012.

[37] J. G. Wijmans and R. W. Baker, 'The solution-diffusion model : a review', vol. 107, pp. 1-21, 1995.

[38] S. Foster, 'Multiple Concentration Determination'. Pfeiffer Vacuum, 2012.

[39] The Vacuum Technology Book. Pfeiffer Vacuum GmbH, 2009.

[40] H. Czichos, T. Saito, and L. R. Smith, 'Permeation and Diffusion', in Springer Handbook of Materials Measurement Methods, Springer Berlin Heidelberg, 2006, pp. 371-397.

[41] 'Forane (isoflurane)'. Baxter Healthcare Corporation, Mississauga, ON, 2013.

[42] 'Suprane (desflurane)'. Baxter Healthcare Corporation, Mississauga, ON, 2013.

[43] 'Sevoflurane'. Baxter Healthcare Corporation, Mississauga, ON, 2015.

[44] L. M. Robeson, 'Correlation of separation factor versus permeability for polymeric membranes', J. Memb. Sci.,

vol. 62, pp. 165-185, 1991.

[45] I. Pinnau and L. G. Toy, 'Transport of organic vapors through poly(1-trimethylsilyl-1-propyne)', J. Memb. Sci., vol. 116, pp. 199-209, 1996.

[46] A. Morisato and I. Pinnau, 'Synthesis and gas permeation properties of poly(4-methyl-2-pentyne)', J. Memb. Sci., vol. 121, pp. 243-250, 1996.

[47] L. G. Toy, K. Nagai, B. D. Freeman, I. Pinnau, Z. He, T. Masuda, M. Teraguchi, and Y. P. Yampolskii, 'Pure-gas and vapor permeation and sorption properties of poly[1-phenyl-2-[p-(trimethylsilyl)phenyl]acetylene] (PTMSDPA)', Macromolecules, vol. 33, pp. 2516-2524, 2000.

[48] a Morisato, H. C. Shen, S. S. Sankar, B. D. Freeman, I. Pinnau, and C. G. Casillas, 'Polymer characterization and gas permeability of poly(1-trimethylsilyl-1-propyne) [PTMSP], poly(1-phenyl-1-propyne) [PPP], and PTMSP/PPP blends', J. Polym. Sci. Part B Polym. Phys., vol. 34, pp. 2209-2222, 1996.

[49] L. M. Robeson, 'The upper bound revisited', J. Memb. Sci., vol. 320, pp. 390-400, 2008.

[50] B. W. Rowe, L. M. Robeson, B. D. Freeman, and D. R. Paul, 'Influence of temperature on the upper bound theoretical considerations and comparisons with experimental results', J. Memb. Sci., vol. 360, pp. 58-69, 2010.

[51] B. W. Rowe, L. M. Robeson, B. D. Freeman, and D. R. Paul, 'Influence of temperature on the upper bound: Theoretical considerations and comparison with experimental results', J. Memb. Sci., vol. 360, no. 1-2, pp. 58-69, Sep. 2010.

[52] L. M. Robeson, 'Polymer membranes for gas separation', Curr. Oppinion Solid State Mater. Sci., vol. 4, no. 1999, pp. 549-552, 2000.

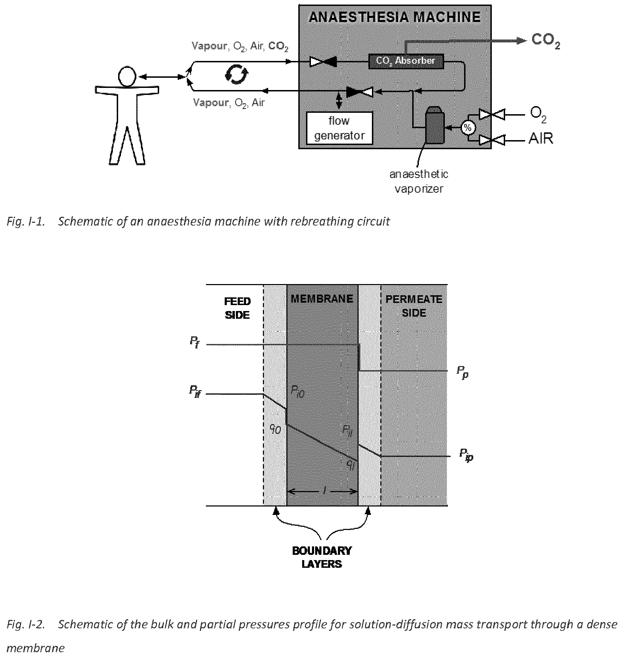

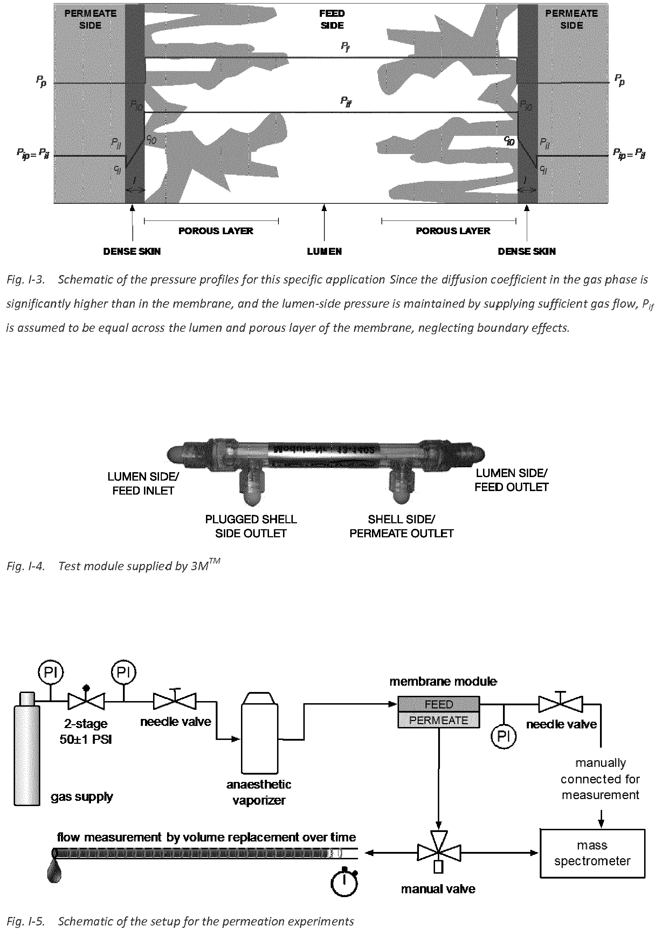

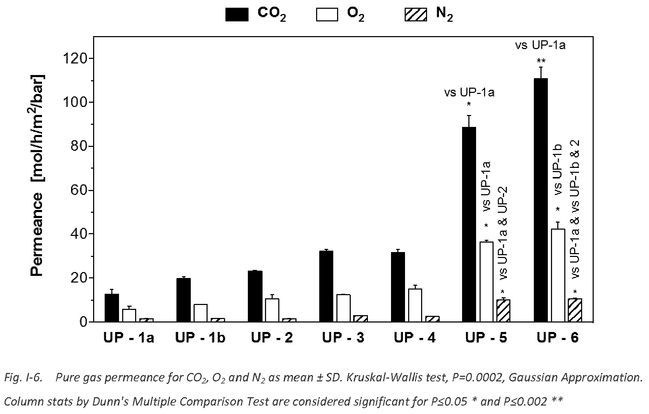

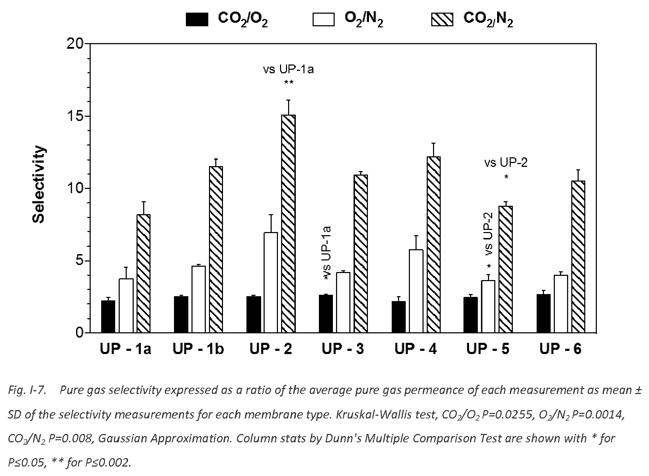

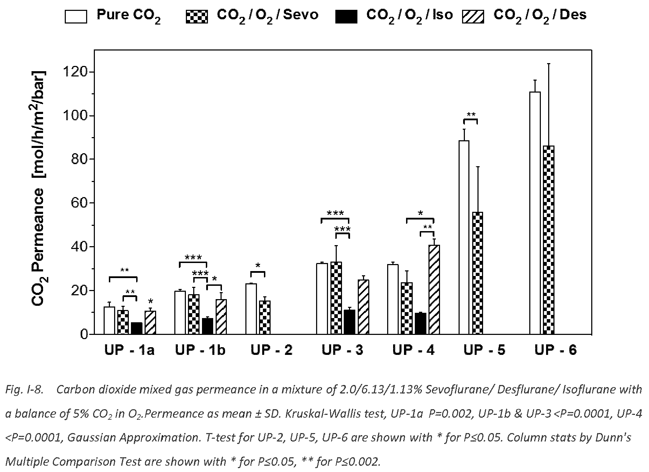

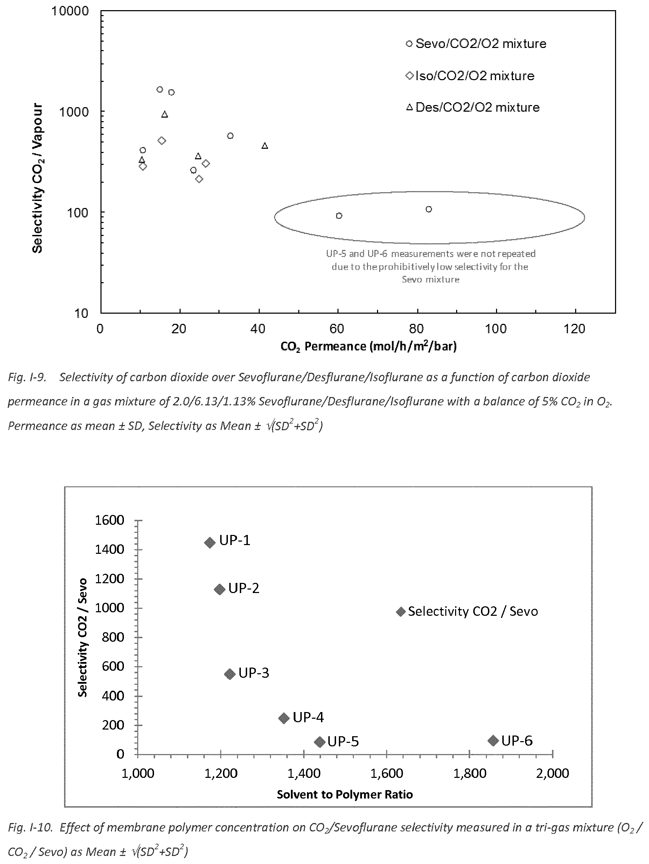

**Claims**

1. Integrally asymmetrical hydrophobic hollow fiber membrane for retention of anesthetic agents, which membrane is composed primarily of a poly(4-methyl-1-pentene) and has an inner surface facing towards its lumen, an outer surface facing outwards, a support layer with a sponge-like, open-pored, microporous structure between inner surface and outer surface and adjacent to this support layer on the outer surface a separation layer with denser structure, wherein the support layer is free of macrovoids and the pores in the support layer are on average essentially isotropic, **characterized in that**

   - the separation layer has a thickness in the range between 1.0 and 3.5 $\mu$m and,
   - that the membrane has a permeance for $CO_2$ of 20-60 mol/(h·m$^2$·bar), a gas separation factor $\alpha(CO_2/N_2)$ of at least 5 and a selectivity $CO_2$ / anesthetic agents of at least 150
   - and that the membrane has a porosity in the range of greater than 35% to less than 50% by volume.

2. Membrane according to Claim 1, **characterized in that** the membrane structure changes abruptly in the transition from the separation to the support layer.

3. Membrane according to Claim 1 or 2, **characterized in that** the separation layer has a thickness between 1.0 $\mu$m and 2.0 $\mu$m.

4. Membrane according to one or more of Claims 1 to 3, **characterized in that** the membrane has a permeance for $CO_2$ of 25-40 mol/(h·m$^2$·bar).

5. Membrane according to one or more of Claims 1 to 4, **characterized in that** the membrane has a permeance for $CO_2$ of 25-40 mol/(h·m$^2$·bar) and an 02 permeance of at least 10 mol/(h·m$^2$·bar).

6. Membrane according to one or more of Claims 1 to 5, **characterized in that** it has a selectivity $CO_2$ / anesthetic agents of at least 220.

7. Membrane according to one or more of Claims 1 to 5, **characterized in that** it has a selectivity $CO_2$ / anesthetic agents of at least 400.

8. Membrane according to one or more of Claims 1 to 7, **characterized in that** it has a gas separation factor $\alpha(CO_2/N_2)$ of at least 8 .

9. Process for producing an integrally asymmetrical hydrophobic hollow fiber membrane according to one or more of claims 1 to 8, the process comprising at least the steps of:

a) preparing a homogeneous solution of a polymer component consisting of a poly(4-methyl-1-pentene) in a solvent system containing a compound A and a compound B that are liquid and miscible with each other at the dissolving temperature, whereby the employed mixture of the polymer component and compounds A and B has a critical demixing temperature and a solidification temperature and has a miscibility gap in the liquid state of aggregation below the critical demixing temperature, whereby a strong solvent for the polymer component is selected for compound A, for which the demixing temperature of a solution of 25% by weight of the polymer component in this solvent is at least 10% below the melting point of the pure polymer component, and compound B raises the demixing temperature of a solution consisting of the polymer component and compound A, wherein compound B is a weak non-solvent for the polymer component, which does not dissolve the polymer component to form a homogeneous solution when heated to the boiling point of compound B and for which the demixing temperature of a system consisting of 25% by weight of the polymer component, 10% by weight of the weak non-solvent, and 65% by weight of compound A, used as the solvent, is at most 10% above the demixing temperature of a system consisting of 25% by weight of the polymer component and 75% by weight of compound A,

b) rendering the solution to form a hollow fiber, with outer and inner surfaces, in a die having an exit surface and a die temperature above the critical demixing temperature,

c) cooling of the hollow fiber using a liquid cooling medium having an entrance surface, which cooling medium does not dissolve the polymer component or react chemically with it at temperatures up to the die temperature and is tempered to a cooling temperature below the solidification temperature, wherein the cooling medium is a homogeneous, single-phase liquid at the cooling temperature and the cooling is done at such a rate that a thermodynamic non-equilibrium liquid-liquid phase separation into a high-polymer-content phase and a low-polymer content phase takes place and solidification of the high-polymer-content phase subsequently occurs when the temperature falls below the solidification temperature,

d) possibly removing compounds A and B from the hollow fiber, **characterized in that** the concentration of the polymer component in the homogeneous solution is in the range between 42.5 and 45.8% by weight and the concentration of the solvent system in the range between 57.5 and 54.2% by weight and that the hollow fiber leaving the die runs through a gap between the exit surface of the die and the surface of the cooling medium before entering the cooling medium, wherein the gap has a length in the range of 5-30 mm.

10. Process according to Claim 9, **characterized in that** the cooling medium is a liquid that is a strong non-solvent for the polymer component, for which the demixing temperature of a system consisting of 25% by weight of the polymer component, 10% by weight of the strong non-solvent, and 65% by weight of compound A, used as a solvent, is at least 10% higher than the demixing temperature of a system consisting of 25% by weight of the polymer component and 75% by weight of compound A.

11. Process according to Claim 9 or 10, **characterized in that** the concentration of the polymer component in the homogeneous solution is in the range of 43-45.5% by weight and the concentration of the solvent system in the range of 57-54.5% by weight.

12. Process according to one or more of Claims 9 to 11, **characterized in that** dioctyl adipate, isopropyl myristate, diphenyl ether, dibenzyl ether, or a mixture thereof is used as compound A.

13. Process according to one or more of Claims 9 to 12, **characterized in that** glycerin triacetate, diethyl phthalate, castor oil, N,N-bis(2-hydroxyethyl)tallow amine, soybean oil, or a mixture thereof is used as compound B.

14. Process according to Claim 12, **characterized in that** dioctyl adipate is used as compound A.

15. Process according to Claim 13, **characterized in that** a mixture of glycerin triacetate and castor oil is used as compound B.

*Fig. I-1.  Schematic of an anaesthesia machine with rebreathing circuit*

*Fig. I-2.  Schematic of the bulk and partial pressures profile for solution-diffusion mass transport through a dense membrane*

Fig. I-3.  Schematic of the pressure profiles for this specific application Since the diffusion coefficient in the gas phase is significantly higher than in the membrane, and the lumen-side pressure is maintained by supplying sufficient gas flow, $P_{if}$ is assumed to be equal across the lumen and porous layer of the membrane, neglecting boundary effects.

Fig. I-4.  Test module supplied by 3M[TM]

Fig. I-5.  Schematic of the setup for the permeation experiments

Fig. I-6.   Pure gas permeance for $CO_2$, $O_2$ and $N_2$ as mean ± SD. Kruskal-Wallis test, P=0.0002, Gaussian Approximation.

Column stats by Dunn's Multiple Comparison Test are considered significant for P≤0.05 * and P≤0.002 **

*Fig. I-7.* *Pure gas selectivity expressed as a ratio of the average pure gas permeance of each measurement as mean ±*
*SD of the selectivity measurements for each membrane type. Kruskal-Wallis test, $CO_2/O_2$ P=0.0255, $O_2/N_2$ P=0.0014,*
*$CO_2/N_2$ P=0.008, Gaussian Approximation. Column stats by Dunn's Multiple Comparison Test are shown with * for*
*P≤0.05, ** for P≤0.002.*

Fig. I-8. Carbon dioxide mixed gas permeance in a mixture of 2.0/6.13/1.13% Sevoflurane/ Desflurane/ Isoflurane with a balance of 5% $CO_2$ in $O_2$. Permeance as mean ± SD. Kruskal-Wallis test, UP-1a P=0.002, UP-1b & UP-3 <P=0.0001, UP-4 <P=0.0001, Gaussian Approximation. T-test for UP-2, UP-5, UP-6 are shown with * for P≤0.05. Column stats by Dunn's Multiple Comparison Test are shown with * for P≤0.05, ** for P≤0.002.

Fig. I-9.   Selectivity of carbon dioxide over Sevoflurane/Desflurane/Isoflurane as a function of carbon dioxide permeance in a gas mixture of 2.0/6.13/1.13% Sevoflurane/Desflurane/Isoflurane with a balance of 5% $CO_2$ in $O_2$. Permeance as mean ± SD, Selectivity as Mean ± $\sqrt{(SD^2+SD^2)}$

Fig. I-10.  Effect of membrane polymer concentration on $CO_2$/Sevoflurane selectivity measured in a tri-gas mixture ($O_2$ / $CO_2$ / Sevo) as Mean ± $\sqrt{(SD^2+SD^2)}$

Europäisches
Patentamt

European
Patent Office

Office européen
des brevets

## EUROPEAN SEARCH REPORT

**Application Number**

EP 16 16 6434

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 6 497 752 B1 (KESSLER ERICH [DE] ET AL) 24 December 2002 (2002-12-24) * claim 1 * * claim 15 * * claim 11 * | 1-15 | INV. B01D69/08 B01D53/22 B01D71/26 |
| A,D | WO 2014/094139 A1 (DMF MEDICAL INC [CA]) 26 June 2014 (2014-06-26) * the whole document * | 1-15 | |
| A | CHRISTOPH WIESENACK ET AL: "In Vivo Uptake and Elimination of Isoflurane by Different Membrane Oxygenators during Cardiopulmonary Bypass", ANESTHESIOLOGY., vol. 97, no. 1, 1 July 2002 (2002-07-01), pages 133-138, XP055312250, PHILADELPHIA, PA, US ISSN: 0003-3022, DOI: 10.1097/00000542-200207000-00019 * the whole document * | 1-15 | |
| A | WO 03/061812 A2 (MEMBRANA GMBH [DE]; KESSLER ERICH [DE]; BATZILLA THOMAS [DE]; WECHS FR) 31 July 2003 (2003-07-31) * the whole document * | 1-15 | **TECHNICAL FIELDS SEARCHED (IPC)**<br><br>B01D |
| A | CN 104 707 490 A (HANGZHOU FAIR FILTRATION TECHNOLOGY CO LTD) 17 June 2015 (2015-06-17) * the whole document * | 1-15 | |
| A | KR 100 654 083 B1 (BATZILLA) 7 December 2006 (2006-12-07) * the whole document * | 1-15 | |
| A | US 6 375 876 B1 (KESSLER ERICH [DE] ET AL) 23 April 2002 (2002-04-23) * the whole document * | 1-15 | |

The present search report has been drawn up for all claims

| Place of search | Date of completion of the search | Examiner |
|---|---|---|
| Munich | 24 October 2016 | Hoyer, Michael |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

 

& : member of the same patent family, corresponding
 document

EPO FORM 1503 03.82 (P04C01)

## ANNEX TO THE EUROPEAN SEARCH REPORT
## ON EUROPEAN PATENT APPLICATION NO.

EP 16 16 6434

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2016

| Patent document cited in search report | | Publication date | Patent family member(s) | | Publication date |
|---|---|---|---|---|---|
| US 6497752 | B1 | 24-12-2002 | AT | 250971 T | 15-10-2003 |
| | | | AU | 748844 B2 | 13-06-2002 |
| | | | AU | 2665100 A | 07-08-2000 |
| | | | BR | 0007614 A | 30-10-2001 |
| | | | CA | 2359050 A1 | 27-07-2000 |
| | | | CN | 1336848 A | 20-02-2002 |
| | | | DK | 1144096 T3 | 09-02-2004 |
| | | | EP | 1144096 A1 | 17-10-2001 |
| | | | ES | 2204513 T3 | 01-05-2004 |
| | | | JP | 4996011 B2 | 08-08-2012 |
| | | | JP | 2002535115 A | 22-10-2002 |
| | | | US | 6497752 B1 | 24-12-2002 |
| | | | WO | 0043114 A1 | 27-07-2000 |
| WO 2014094139 | A1 | 26-06-2014 | CA | 2895224 A1 | 26-06-2014 |
| | | | EP | 2934645 A1 | 28-10-2015 |
| | | | JP | 2016500306 A | 12-01-2016 |
| | | | US | 2014174438 A1 | 26-06-2014 |
| | | | WO | 2014094139 A1 | 26-06-2014 |
| WO 03061812 | A2 | 31-07-2003 | AT | 337080 T | 15-09-2006 |
| | | | BR | 0306850 A | 03-11-2004 |
| | | | CA | 2477190 A1 | 31-07-2003 |
| | | | CN | 1622850 A | 01-06-2005 |
| | | | EP | 1469935 A2 | 27-10-2004 |
| | | | JP | 4217627 B2 | 04-02-2009 |
| | | | JP | 2005515061 A | 26-05-2005 |
| | | | US | 2005145107 A1 | 07-07-2005 |
| | | | WO | 03061812 A2 | 31-07-2003 |
| CN 104707490 | A | 17-06-2015 | NONE | | |
| KR 100654083 | B1 | 07-12-2006 | NONE | | |
| US 6375876 | B1 | 23-04-2002 | AU | 747646 B2 | 16-05-2002 |
| | | | AU | 3149800 A | 07-08-2000 |
| | | | CN | 1336849 A | 20-02-2002 |
| | | | DK | 1140331 T3 | 07-04-2003 |
| | | | EP | 1140331 A1 | 10-10-2001 |
| | | | JP | 4095773 B2 | 04-06-2008 |
| | | | JP | 2002535114 A | 22-10-2002 |
| | | | US | 6375876 B1 | 23-04-2002 |
| | | | WO | 0043113 A1 | 27-07-2000 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0299381 A
- US 6409921 A
- US 6497752 A
- WO 2012174649 A
- WO 2014094139 A
- US 4519909 A
- US 4564488 A
- US 4666607 A

### Non-patent literature cited in the description

- **R.E. KESTING.** Synthetic Polymeric Membranes. John Wiley & Sons, 1985, 261-264
- **C.A. SMOLDERS ; J.J. VAN AARTSEN ; A. STEENBERGEN.** *Kolloid-Z. und Z. Polymere,* 1971, vol. 243, 14-20
- Characterization of dense PMP membranes for the separation of carbon dioxide from anaesthetic vapours in low pressure applications. *Journal of Membrane Science*
- **F WILFART M SOEHL, N KILCUP, I VOIGT, J HAELSSIG.** *Pending submission to the Journal of Membrane Science*
- Heal. United States. With Spec. Featur. Adults Aged. S. National Center for Health, 2014, 55-64
- *Health expenditure, total (% of GDP),* 28 February 2016, http://data.worldbank.org/indicator/SH.XPD.TOTL.ZS/countries/1W-US-CA-EU?order=wbapi_data_value_2013 wbapi_data_value wbapi_data_value-last&sort=asc&display=graph
- **J. LUBITZ ; L. CAI ; E. KRAMAROW ; H. LENTZNER.** Health, life expectancy, and health care spending among the elderly. *N Engl J Med,* 2003, vol. 349 (11), 1048-1055
- **T. A. COMANS ; N. M. PEEL ; R. E. HUBBARD ; A. D. MULLIGAN ; L. C. GRAY ; P. A. SCUFFHAM.** The increase in healthcare costs associated with frailty in older people discharged to a post-acute transition care program. *Age Ageing,* 2016
- **F. E. TURRENTINE ; H. WANG ; V. B. SIMPSON ; R. S. JONES.** Surgical Risk Factors, Morbidity, and Mortality in Elderly Patients. *J. Am. Coll. Surg.,* 2006, vol. 203 (6), 865-877
- **A. J. TURNER ; S. NIKOLOVA ; M. SUTTON.** The effect of living alone on the costs and benefits of surgery amongst older people. *Soc. Sci. Med.,* 2016, vol. 150, 95-103
- **J. M. LEUNG ; T. L. TSAI ; L. P. SANDS.** Preoperative Frailty in Older Surgical Patients Is Associated with Early Postoperative Delirium. *Anesth. Analg.,* May 2011, vol. 112 (5), 1199-1201
- **C. R. STABERNACK ; E. I. EGER ; U. H. WARNKEN ; H. FÜRSTER ; D. K. HANKS ; L. D. FERRELL ; H. FÖRSTER.** Sevoflurane degradation by carbon dioxide absorbents may produce more than one nephrotoxic compound in rats. *Can. J. Anesth.,* January 2003, vol. 50 (3), 249-252
- **Y. C. LI ; Y. N. ZHANG ; S. J. LIU ; Y. M. ZHOU ; C. S. WANG ; Y. L. GONG ; E. Y. LI.** Degradation products of different water content sevoflurane in carbon dioxide absorbents by gas chromatography-mass spectrometry analysis. *Chin. Med. J. (Engl).,* April 2011, vol. 124 (7), 1050-1054
- **H. BITO ; K. IKEDA.** Degradation products of sevoflurane during low-flow anaesthesia. *Br. J. Anaesth.,* January 1995, vol. 74 (1), 56-59
- **D. D. CUNNINGHAM ; S. HUANG ; J. WEBSTER ; J. MAYORAL ; R. W. GRABENKORT.** Sevoflurane degradation to compound A in anaesthesia breathing systems. *Br. J. Anaesth.,* October 1996, vol. 77 (4), 537-543
- **E. D. KHARASCH ; J. L. SCHROEDER ; P. SHEFFELS ; H. D. LIGGITT.** Influence of sevoflurane on the metabolism and renal effects of compound A in rats. *Anesthesiology,* December 2005, vol. 103 (6), 1183-8
- **F. MARINI ; I. BELLUGI ; D. GAMBI ; M. PACENTI ; S. DUGHERI ; L. FOCARDI ; G. TULLI.** Compound A, formaldehyde and methanol concentrations during low-flow sevoflurane anaesthesia: comparison of three carbon dioxide absorbers. *Acta Anaesthesiol. Scand.,* May 2007, vol. 51 (5), 625-32
- **M. P. BOUCHE ; J. F. VAN BOCXLAER ; G. ROLLY ; L. F. VERSICHELEN ; M. M. STRUYS ; E. MORTIER ; A P. DE LEENHEER.** Quantitative determination of vapor-phase compound A in sevoflurane anesthesia using gas chromatography-mass spectrometry. *Clin. Chem.,* February 2001, vol. 47 (2), 281-91

- **C. KEIJZER ; R. S. G. M. PEREZ ; J. J. DE LANGE.** Compound A and carbon monoxide production from sevoflurane and seven different types of carbon dioxide absorbent in a patient model. *Acta Anaesthesiol. Scand.,* 2007, vol. 51 (12), 31-37

- **P. FEISS ; M. H. DEMONTOUX ; D. COLIN.** Anesthetic gas and vapor saving with minimal flow anesthesia. *Acta Anaesthesiol. Belg.,* January 1990, vol. 41 (3), 249-51

- **S. M. COTTER ; A. J. PETROS ; C. J. DORE ; N. D. BARBER ; D. C. WHITE.** Low-flow anaesthesia. Practice, cost implications and acceptability. *Anaesthesia,* 1991, vol. 46 (12), 1009-1012

- **J. P. BENGTSON ; H. SONANDER ; O. STENQVIST.** Comparison of costs of different anaesthetic techniques. *Acta Anaesthesiol. Scand.,* 1988, vol. 32 (1), 33-35

- **S. M. RYAN ; C. J. NIELSEN.** Global warming potential of inhaled anesthetics: application to clinical use. *Anesth. Analg.,* July 2010, vol. 111 (1), 92-8

- **Y. ISHIZAWA.** General anesthetic gases and the global environment. *Anesth. Analg.,* 2011, vol. 112 (1), 213-217

- **P. FORSTER ; V. RAMASWAMY ; P. ARTAXO ; T. BERNTSEN ; R. BETTS ; D. W. FAHEY ; J. HAYWOOD ; J. LEAN ; D. C. LOWE ; G. MYHRE.** Changes in Atmospheric Constituents and in Radiative Forcing. 2007

- **E. M. SAKAI ; L. A. CONNOLLY ; J. A. KLAUCK.** Inhalation Anesthesiology and Volatile Liquid Anesthetics: Focus on Isoflurane, Desflurane, and Sevoflurane. *Pharmacotherapy,* 2005, vol. 25 (12

- **J. M. FELDMAN.** Managing fresh gas flow to reduce environmental contamination. *Anesth. Analg.,* May 2012, vol. 114 (5), 1093-101

- **F. M. WILFART ; A. MCFADGEN ; B. KENT ; K. GARDINER ; M. K. SCHMIDT.** Delivery of Vapors on Cardiopulmonary Bypass using Different Oxygenator Membranes. *Biomed. Eng. (NY).,* 2011, 265-270

- **C. PRASSER ; M. ZELENKA ; M. GRUBER ; A PHILIPP ; A KEYSER ; C. WIESENACK.** Elimination of sevoflurane is reduced in plasma-tight compared to conventional membrane oxygenators. *Eur. J. Anaesthesiol.,* February 2008, vol. 25 (2), 152-7

- **C. WIESENACK ; G. WIESNER ; C. KEYL ; M. GRUBER ; A. PHILIPP ; M. RITZKA ; C. PRASSER ; K. TAEGER.** In vivo uptake and elimination of isoflurane by different membrane oxygenators during cardiopulmonary bypass. *Anesthesiology,* July 2002, vol. 97 (1), 133-138

- **G. MAUVIEL ; J. BERTHIAUD ; C. VALLIERES ; D. ROIZARD ; E. FAVRE.** Dense membrane permeation: From the limitations of the permeability concept back to the solution-diffusion model. *J. Memb. Sci.,* 2005, vol. 266, 62-67

- **J.-L. LI ; B.-H. CHEN.** Review of CO2 absorption using chemical solvents in hollow fiber membrane contactors. *Sep. Purif. Technol.,* February 2005, vol. 41 (2), 109-122

- **B. KRUCZEK ; H. FRISCH ; R. CHAPANIAN.** Analytical solution for the effective time lag of a membrane in a permeate tube collector in which Knudsen flow regime exists. *J. Memb. Sci.,* April 2005, vol. 256 (1), 57-63

- **B. KRUCZEK ; F. SHEMSHAKI ; S. LASHKARI ; R. CHAPANIAN ; H. L. FRISCH.** Effect of a resistance-free tank on the resistance to gas transport in high vacuum tube. *J. Memb. Sci.,* September 2006, vol. 280 (1-2), 29-36

- **R. CHAPANIAN ; F. SHEMSHAKI ; B. KRUCZEK.** Flow rate measurement errors in vacuum tubes: Effect of gas resistance to accumulation. *Can. J. Chem. Eng.,* August 2008, vol. 86 (4), 711-718

- **S. LASHKARI.** *Fundamental Aspects of Membrane Characterization by Constant Volume and Constant Pressure Techniques,* 2008

- **T. GRAHAM.** *LV . On the absorption and dialytic separation of gases by colloid septa,* vol. 32, 401-420

- Challenges in Microflow Measurements. **B. KRUCZEK ; S. LASHKARI.** Flow Measurement. InTech, 2012

- **Y. YAMPOLSKII.** Polymeric Gas Separation Membranes. *Chem. Eng. Sci.,* 2012, vol. 45, 3298-311

- **J. G. WIJMANS ; R. W. BAKER.** *The solution-diffusion model : a review,* 1995, vol. 107, 1-21

- **S. FOSTER.** Multiple Concentration Determination. Pfeiffer Vacuum, 2012

- The Vacuum Technology Book. Pfeiffer Vacuum GmbH, 2009

- Permeation and Diffusion. **H. CZICHOS ; T. SAITO ; L. R. SMITH.** Springer Handbook of Materials Measurement Methods. Springer Berlin Heidelberg, 2006, 371-397

- Forane (isoflurane). Baxter Healthcare Corporation, 2013

- Suprane (desflurane). Baxter Healthcare Corporation, 2013

- Sevoflurane. Baxter Healthcare Corporation, 2015

- **L. M. ROBESON.** Correlation of separation factor versus permeability for polymeric membranes. *J. Memb. Sci.,* 1991, vol. 62, 165-185

- **I. PINNAU ; L. G. TOY.** Transport of organic vapors through poly(1-trimethylsilyl-1-propyne). *J. Memb. Sci.,* 1996, vol. 116, 199-209

- **A. MORISATO ; I. PINNAU.** Synthesis and gas permeation properties of poly(4-methyl-2-pentyne). *J. Memb. Sci.,* 1996, vol. 121, 243-250

- **L. G. TOY ; K. NAGAI ; B. D. FREEMAN ; I. PINNAU ; Z. HE ; T. MASUDA ; M. TERAGUCHI ; Y. P. YAMPOLSKII.** Pure-gas and vapor permeation and sorption properties of poly[1-phenyl-2-[p-(trimethylsilyl)phenyl]acetylene] (PTMSDPA). *Macromolecules,* 2000, vol. 33, 2516-2524
- **A MORISATO ; H. C. SHEN ; S. S. SANKAR ; B. D. FREEMAN ; I. PINNAU ; C. G. CASILLAS.** Polymer characterization and gas permeability of poly(1-trimethylsilyl-1-propyne) [PTMSP], poly(1-phenyl-1-propyne) [PPP], and PTMSP/PPP blends. *J. Polym. Sci. Part B Polym. Phys.,* 1996, vol. 34, 2209-2222
- **L. M. ROBESON.** The upper bound revisited. *J. Memb. Sci.,* 2008, vol. 320, 390-400
- **B. W. ROWE ; L. M. ROBESON ; B. D. FREEMAN ; D. R. PAUL.** Influence of temperature on the upper bound theoretical considerations and comparisons with experimental results. *J. Memb. Sci.,* 2010, vol. 360, 58-69
- **B. W. ROWE ; L. M. ROBESON ; B. D. FREEMAN ; D. R. PAUL.** Influence of temperature on the upper bound: Theoretical considerations and comparison with experimental results. *J. Memb. Sci.,* September 2010, vol. 360 (1-2), 58-69
- **L. M. ROBESON.** Polymer membranes for gas separation. *Curr. Oppinion Solid State Mater. Sci.,* 2000, vol. 4 (1999), 549-552